(19) Europäisches Patentamt
European Patent Office
Office européen des brevets

(11) **EP 4 358 606 B1**

(12) **EUROPEAN PATENT SPECIFICATION**

(45) Date of publication and mention
of the grant of the patent:
**27.05.2026 Bulletin 2026/22**

(21) Application number: **23762358.2**

(22) Date of filing: **17.08.2023**

(51) International Patent Classification (IPC):
*H04W 56/00* (2009.01)        *H04W 8/00* (2009.01)
*H04W 84/20* (2009.01)        *H04W 4/80* (2018.01)
*H04W 92/18* (2009.01)        *H04W 84/12* (2009.01)

(52) Cooperative Patent Classification (CPC):
**H04W 8/005; H04W 4/80; H04W 56/0015;**
**H04W 84/20;** H04W 48/20; H04W 84/12;
H04W 92/18

(86) International application number:
**PCT/KR2023/012171**

(87) International publication number:
**WO 2024/053897 (14.03.2024 Gazette 2024/11)**

(54) **ELECTRONIC DEVICE AND NAN-BASED COMMUNICATION METHOD**

ELEKTRONISCHE VORRICHTUNG UND NAN-BASIERTES KOMMUNIKATIONSVERFAHREN

DISPOSITIF ÉLECTRONIQUE ET PROCÉDÉ DE COMMUNICATION BASÉ SUR NAN

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **06.09.2022 KR 20220112856**
**11.10.2022 KR 20220129458**

(43) Date of publication of application:
**24.04.2024 Bulletin 2024/17**

(73) Proprietor: **Samsung Electronics Co., Ltd.**
**Suwon-si, Gyeonggi-do 16677 (KR)**

(72) Inventors:
• **JUNG, Buseop**
**Suwon-si**
**Gyeonggi-do 16677 (KR)**
• **KIM, Junsung**
**Suwon-si**
**Gyeonggi-do 16677 (KR)**

(74) Representative: **HGF**
**HGF Limited**
**4th Floor, 1 City Square**
**Leeds LS1 2ES (GB)**

(56) References cited:
**WO-A1-2016/036140        KR-A- 20160 062 534**
**US-A1- 2015 245 305        US-A1- 2016 345 242**
**US-A1- 2017 019 869        US-A1- 2019 021 050**
**US-B2- 10 117 162**

• **WI-FI ALLIANCE: "Neighbor Awareness**
**Networking Specification Version 3.1", 15**
**January 2020 (2020-01-15), XP055658906,**
**Retrieved from the Internet <URL:https://www.**
**wi-fi.org/file/wi-fi-aware-specification> [retrieved**
**on 20200117]**

**Description**

BACKGROUND

1. Field

Embodiments of the present disclosure relate to electronic devices and neighbor awareness networking (NAN)-based communication methods.

2. Description of Related Art

Recently, various proximity services with low-power discovery technology that utilizes short-range communication technology are actively being developed. For example, a proximity communication service for nearby adjacent electronic devices to exchange data quickly through a proximity network is being developed.

In recent wireless fidelity (Wi-Fi) standards, low-power discovery technology called neighbor awareness networking (NAN) is being developed, and short-range proximity services using NAN are actively being developed.

XP 55658906A is a Neighbor Awareness Networking (NAN) specification.

US 20150245305A relates to a method for supporting the discovery of synchronized clusters of mobile station in a wireless communication network.

US 2019021050A1 relates to a technique in which a plurality of communication apparatuses recognize each other

SUMMARY

The present invention is defined by the independent claims. Further aspects of the present invention are outlined in the dependent claims. According to embodiments, an electronic device includes at least one wireless communication module configured to transmit and receive a wireless signal; at least one processor electrically and/or operatively connected to the wireless communication module; and a memory electrically and/or operatively connected to the processor and configured to store instructions executable by the processor. When the instructions are executed by the processor, the processor may perform synchronization with an external electronic device based on time synchronization function (TSF) timer associated information of a reference access point (AP). The processor may also form a neighbor awareness networking (NAN) cluster including the electronic device and the external electronic device based on a result of performing the synchronization. The NAN cluster may be maintained in a non-master mode based on TSF timer information of the reference AP.

According to embodiments, an electronic device includes at least one wireless communication module configured to transmit and receive a wireless signal; at least one processor operatively and/or electrically connected to the wireless communication module; and a memory operatively and/or electrically connected to the processor and configured to store instructions executable by the processor. When the instructions are executed by the processor, the processor may be configured to form a NAN cluster including the electronic device based on TSF timer associated information of a reference AP. The NAN cluster may be maintained in a non-master mode based on TSF timer information of the reference AP or maintained in a master mode based on TSF timer information of a master device of the NAN cluster.

According to embodiments, an operating method of an electronic device includes performing synchronization with an external electronic device based on TSF timer associated information of a reference AP. The operating method may include forming a NAN cluster including the electronic device and the external electronic device based on a result of performing the synchronization. The NAN cluster may be maintained in a non-master mode based on TSF timer information of the reference AP.

According to embodiments, an operating method of an electronic device includes forming a NAN cluster including the electronic device based on TSF timer associated information of a reference AP. The NAN cluster may be maintained in a non-master mode based on TSF timer information of the reference AP or maintained in a master mode based on TSF timer information of a master device of the NAN cluster.

BRIEF DESCRIPTION OF THE DRAWINGS

The above and other aspects, features, and advantages of certain embodiments of the present disclosure will be more apparent from the following detailed description, taken in conjunction with the accompanying drawings, in which:

FIG. 1 is a diagram illustrating a neighbor awareness networking (NAN) cluster according to an embodiment;
FIG. 2 is a diagram illustrating NAN protocol-based communication according to an embodiment;

FIG. 3 is a diagram illustrating communication between electronic devices in a NAN cluster according to an embodiment;

FIG. 4 is a diagram schematically illustrating a NAN security publish/subscribe message flow according to an embodiment;

FIG. 5 is a diagram illustrating the role and state transitions of electronic devices included in a NAN cluster according to an embodiment;

FIGS. 6A and 6B are diagrams illustrating the discovery beacon transmission of a master device;

FIGS. 7A and 7B are diagrams illustrating a time synchronization function (TSF) used for time synchronization in a NAN cluster according to an embodiment;

FIG. 8 is a diagram illustrating an operation of forming a NAN cluster;

FIG. 9 is a schematic block diagram of an electronic device according to an embodiment;

FIGS. 10A to 10C are diagrams illustrating an operating method of an electronic device according to an embodiment;

FIG. 11 is a diagram illustrating an operating method of an electronic device according to an embodiment;

FIG. 12 is a diagram illustrating an operating method of an electronic device according to an embodiment;

FIGS. 13A and 13B are flowcharts illustrating examples of an operating method of an electronic device according to an embodiment; and

FIG. 14 is a block diagram of an electronic device in a network environment according to an embodiment.

DETAILED DESCRIPTION

Hereinafter, embodiments will be described in detail with reference to the accompanying drawings. When describing the embodiments with reference to the accompanying drawings, like reference numerals refer to like elements and a repeated description related thereto will be omitted.

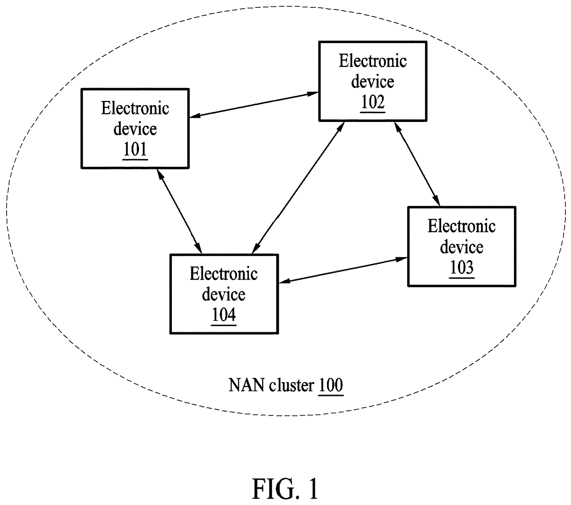

FIG. 1 is a diagram illustrating a neighbor awareness networking (NAN) cluster according to an embodiment.

Referring to FIG. 1, according to an embodiment, a neighbor awareness networking (NAN) cluster 100 may include one or more electronic devices (e.g., an electronic device 101, an electronic device 102, an electronic device 103, and/or an electronic device 104 of FIG. 1). Within the NAN cluster 100, the electronic device 101, 102, 103, and 104 may communicate with each other through NAN (or a NAN protocol). The NAN cluster 100 may refer to a set of one or more electronic devices 101, 102, 103, and 104 forming a proximity network so that the electronic devices 101, 102, 103, and 104 may transmit and receive data to and from the other electronic devices 101, 102, 103, 104 within the NAN cluster.

According to an embodiment, the electronic devices 101, 102, 103, and 104 may be devices that support NAN, which is low-power discovery technology, and may be referred to as NAN devices (or NAN terminals). In addition, the electronic devices 101, 102, 103, and 104 may operate in a frequency band of (or in a region around) 2.4 GHz, 5 GHz, and/or 6 GHz, and may exchange signals based on the Institute of Electrical and Electronic Engineers (IEEE) 802.11 protocol (e.g., 802.11 a/b/g/n/ac/ax/be). The electronic devices 101, 102, 103, and 104 may exchange signals in a unicast, broadcast, and/or multicast manner.

According to an embodiment, the electronic devices 101, 102, 103, and 104 may form a NAN cluster 100 by transmitting and receiving beacons (e.g., discovery beacons). The electronic devices 101, 102, 103, and 104 in the NAN cluster 100 may be those on which time synchronization and channel synchronization have been performed.

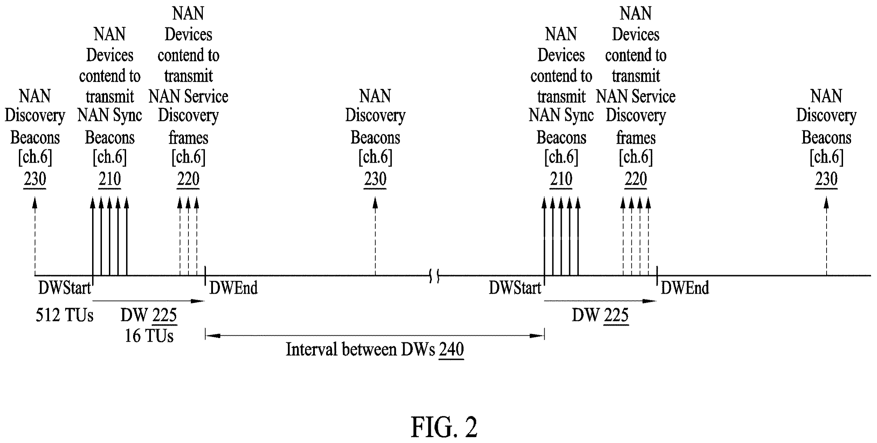

According to an embodiment, the discovery beacon (e.g., discovery beacons 230 of FIG. 2) may be beacon signals for discovering an electronic device capable of forming a cluster (e.g., the NAN cluster 100) for a proximity network. Further, the discovery beacons may be signals transmitted so that another electronic device (not shown) failing to join the NAN cluster 100 may discover the NAN cluster 100. The discovery beacons may be signals for informing electronic devices of the existence of the NAN cluster 100. An electronic device (not shown) not joining the NAN cluster 100 may receive discovery beacons through passive scanning and discover and join the NAN cluster 100 based on the received discovery beacon.

According to an embodiment, a discovery beacon may include information necessary for synchronization with the NAN cluster 100. In other words, the discovery beacon may include information to enable an electronic device outside the NAN cluster to join and synchronize with the NAN cluster 100. For example, the discovery beacon may include a frame control (FC) field indicating a function of a signal (e.g., a beacon), a broadcast address, a media access control (MAC) address of a transmission electronic device, a cluster identifier (ID), a sequence control field, a time stamp for a beacon frame, a beacon interval indicating a transmission interval of the discovery beacon, and/or capability information on the transmission electronic device. In addition, the discovery beacon may further include an information element related to at least one proximity network (or cluster) (e.g., the NAN cluster 100). Proximity network-related information may be referred to as "attribute information".

According to an embodiment, the electronic devices 101, 102, 103, and 104 may transmit and receive signals (e.g., synchronization beacons (e.g., synchronization beacons 210 of FIG. 2), service discovery frames (SDFs) (e.g., SDFs 220 of FIG. 2), and/or NAN action frames (NAPs)) within a synchronized time duration (e.g., a discovery window (DW)). That is, a discovery window (DW) may be a period of time in which one or more of the electronic devices in the NAN cluster transmit and receive signals from the one or more of the other electronic devices in the NAN cluster. That is, an electronic device in the NAN cluster may not transmit or receive signals from another electronic device in the NAN cluster outside the DW time frame. The DWs for each of the electronic devices in the NAN cluster may be synchronized, meaning that the DWs for each of the electronic devices in the NAN cluster are the same. In other words, the start time, end time, and overall duration of the DWs may be the same for all of the electronic devices within the NAN cluster. For example, the electronic devices 101, 102, 103, and 104 may have time clocks synchronized with each other and may thus exchange synchronization beacons, SDFs, and/or NAFs with each other within a synchronized DW at the same time.

According to an embodiment, the synchronization beacons (e.g., the synchronization beacons 210 of FIG. 2) may be signals for maintaining synchronization between the synchronized electronic devices 101, 102, 103, and/or 104 in the NAN cluster 100. The synchronization beacons may be periodically transmitted and received in each DW in order to continuously maintain the time synchronization and channel synchronization of the electronic devices 101, 102, 103, and 104 in the NAN cluster 100. That is, each electronic device within the NA cluster may transmit and/or receive a plurality of synchronization beacons during each DW. The synchronization beacons may be transmitted by a designated electronic device among the electronic devices 101, 102, 103, and 104 in the NAN cluster 100. An electronic device that transmits synchronization beacons may include or be referred to as an anchor master device, a master device, or a non-master sync device defined in the NAN standard.

According to an embodiment, the synchronization beacons may include information necessary for synchronization of the electronic devices 101, 102, 103, and 104 in the NAN cluster 100. That is, the synchronization beacons may include information necessary for the electronic devices in the NAN cluster to synchronize with one another so that a plurality of, or all of, the electronic devices within the NAN cluster are synchronized. For example, the synchronization beacons may include at least one of an FC field indicating a function of a signal (e.g., a beacon), a broadcast address, a MAC address of a transmission electronic device, a cluster ID, a sequence control field, a time stamp for a beacon frame, a beacon interval indicating an interval between start points of a DW, and capability information on the transmission electronic device. The synchronization beacons may further include an information element related to at least one proximity network (or cluster) (e.g., the NAN cluster 100). Proximity network-related information may include content for a service provided through the proximity network.

According to an embodiment, SDFs (e.g., the SDFs 220 of FIG. 2) may be signals to exchange data through a proximity network (or cluster) (e.g., the NAN cluster 100). The SDFs may indicate a vendor-specific public action frame and may include various fields. For example, the SDFs may include a category or an action field, and may further include information related to at least one proximity network (e.g., the NAN cluster 100).

According to an embodiment, the electronic devices 101, 102, 103, and 104 included in the NAN cluster 100 may transmit and receive NAFs within a DW. For example, the NAFs may include information related to NAN data path (NDP) setup for performing data communication in a DW, information for schedule update, and/or information for performing NAN ranging (e.g., fine timing measurement (FTM) NAN ranging). The NAFs may be intended to control a schedule of radio resources for coexistence of a NAN operation and a non-NAN operation (e.g., wireless fidelity (Wi-Fi) Direct, mesh, independent basic service set (IBSS), wireless local area network (WLAN), Bluetooth™, or near-field communication (NFC)). The NAFs may include time and channel information available for NAN communication.

FIG. 2 is a diagram illustrating NAN protocol-based communication according to an embodiment.

Referring to FIG. 2, according to an embodiment, signals transmitted within a DW 225 and signals transmitted outside of the DW 225 (e.g., for an interval between DWs 240) may be identified. Electronic devices (e.g., the electronic devices 101, 102, 103, and/or 104 of FIG. 1) included in a NAN cluster (e.g., the NAN cluster 100 of FIG. 1) may perform discovery, synchronization, and/or data exchange operations according to the NAN protocol. In FIG. 2, it may be assumed that communication is performed through a channel (e.g., Channel 6 (Ch6)) designated based on the NAN standard.

According to an embodiment, at least one (e.g., a master device) of the electronic devices 101, 102, 103, and 104 may broadcast the discovery beacons 230 in every preset first cycle (e.g., about 100 milliseconds (ms)). At least one (e.g., a non-master device) of the electronic devices 101, 102, 103, and 104 may perform scanning in every preset second cycle (e.g., about 10 ms) and receive the discovery beacons 230 broadcasted from the electronic device (e.g., the master device). The electronic devices 101, 102, 103, and 104 may recognize another nearby electronic device based on the discovery beacon 230. The electronic devices 101, 102, 103, and 104 may perform time synchronization and channel synchronization with the recognized electronic device.

According to an embodiment, the time synchronization and channel synchronization may be performed based on the time and channel of an electronic device having the highest master rank in the NAN cluster 100. The electronic devices 101, 102, 103, and 104 may mutually exchange signals related to master rank information indicating a preference for operating as an anchor master. The electronic device having the highest master rank may be determined to be an anchor master device (or a master device). The master device may refer to an electronic device that is a standard of the time synchronization and channel synchronization of the electronic devices 101, 102, 103, and 104 in the NAN cluster 100. The master device may vary depending on the master ranks of electronic devices. The master device may change depending on the master ranks of electronic devices which enter and leave the NAN cluster.

According to an embodiment, the master device may transmit the discovery beacons 230 including information such as a cluster ID (e.g., the ID of the NAN cluster 100) for a duration other than the DW 225 (e.g., an interval between DWs 240). The discovery beacons 230 may be intended to inform the existence of the NAN cluster 100. The master device may transmit the discovery beacons 230 so that another electronic device failing to join the NAN cluster 100 may discover the NAN cluster 100. In other words, the discovery beacon can enable an electronic device which is not a member of the NAN cluster to become aware of the existence of the NAN cluster.

According to an embodiment, the DW 225 may be a duration in which the electronic devices 101, 102, 103, and 104 are activated from a sleep state, which corresponds to a power saving mode, to a wake-up state to exchange data with each other. For example, the DW 225 may be divided into time units (TUs) in milliseconds. The DW 225 for transmitting and receiving the synchronization beacons 210 and the SDFs 220 may occupy "16" TUs. The DW 225 may have a cycle (or an interval) that repeats with "512" TUs.

According to an embodiment, the electronic devices 101, 102, 103, and 104 may operate in an active state during the DW 225 and operate in a low-power state (e.g., a sleep state) for the remaining duration other than the DW 225 (e.g., the interval between DWs 240), thereby reducing power consumption. The DW 225 may be a time (e.g., millisecond) during which the electronic devices 101, 102, 103, and 104 are in an active state (or a wake-up state). During the DW 225, an electronic device in the active state may consume a lot of currents. For the duration other than the DW 225 (e.g., the interval between DWs 240), an electronic device in the low-power state may remain in the sleep state. The electronic devices 101, 102, 103, and 104 may perform low-power discovery. The electronic devices 101, 102, 103, and 104 may be simultaneously activated at the start time (e.g., DW start) of the DW 225, which is time-synchronized, and may simultaneously switch to the sleep state at the end time (e.g., DW end) of the DW 225.

According to an embodiment, at least one (e.g., a master device or a non-master sync device) of the electronic devices 101, 102, 103, and 104 included in the NAN cluster 100 may transmit the synchronization beacons 210 within the DW 225 (e.g., the synchronized DW). The electronic devices 101, 102, 103, and 104 may transmit the SDFs 220 within the DW 225. The electronic devices 101, 102, 103, and 104 may transmit the synchronization beacons 210 and the SDFs 220 on a contention basis. The transmission priority of the synchronization beacons 210 may be higher than that of the SDFs 220.

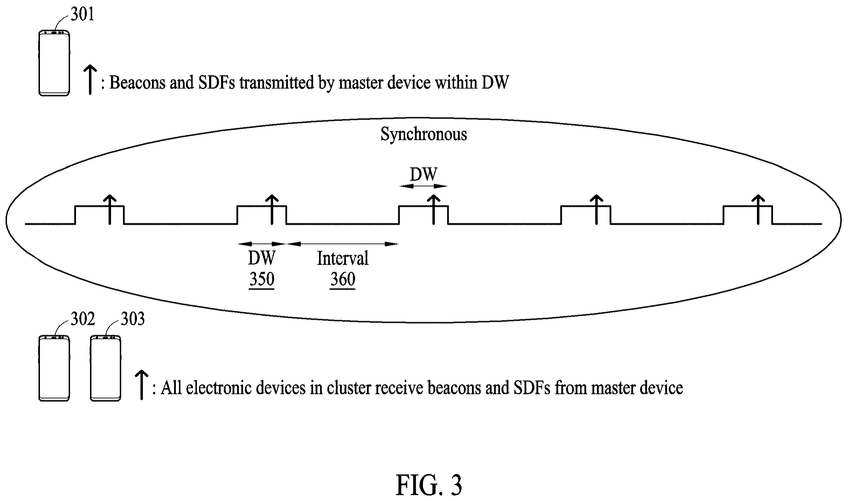

FIG. 3 is a diagram illustrating communication between electronic devices in a NAN cluster according to an embodiment.

Referring to FIG. 3, according to an embodiment, an operation in which electronic devices 301, 302, and 303 form one cluster (e.g., the NAN cluster 100 of FIG. 1) and communicate with each other through wireless short-range communication technology is shown. The electronic devices 301, 302, and 303 of FIG. 3 may be NAN devices like the electronic devices 101, 102, 103, and 104 of FIG. 1. The electronic device 301 may be a master device. The electronic devices 302 and 303 may be non-master devices.

According to an embodiment, the electronic device 301 may transmit beacons (e.g., synchronization beacons), SDFs, and/or NAFs within a DW 350. The electronic device 301 may broadcast the beacons, SDFs, or NAFs within the DW 350 that repeats at every preset interval (or cycle) (e.g., an interval 360). The electronic devices 302 and 303 may receive the beacons, SDFs, and/or NAFs transmitted by the electronic device 301. Each of the electronic devices 302 and 303 may receive the beacons, SDFs, and/or NAFs broadcasted from the electronic device 301 in every DW 350.

According to an embodiment, the beacons transmitted in the DW 350 may be synchronization beacons. The synchronization beacons may include information for maintaining the synchronization between the electronic devices 301, 302, and 303. The electronic devices 301, 302, and 303 may be synchronized with the time clock of the master device 301 and activated at the same time (e.g., in the DW 350). The electronic devices 302 and 303 may remain in a sleep state for a duration other than the DW 350 (e.g., the interval 360) to reduce current consumption.

According to an embodiment, the NAFs transmitted in the DW 350 may include information related to NDP setup for performing data communication in a DW, information for schedule update, and/or information for performing NAN ranging (e.g., FTM NAN ranging). Hereinafter, an NDP setup flow will be described.

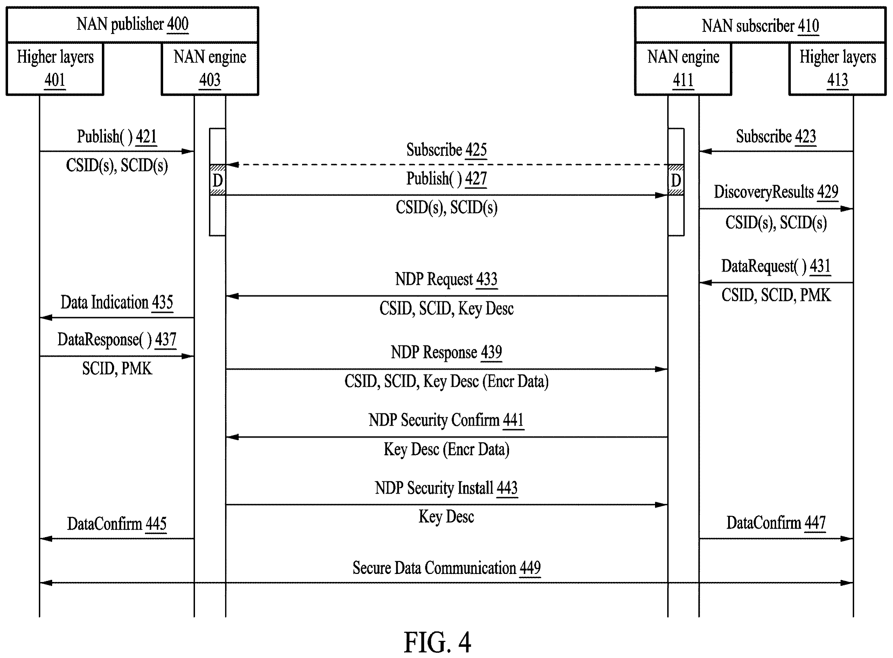

FIG. 4 is a diagram schematically illustrating NAN security publish/subscribe message flow according to an embodiment.

Referring to FIG. 4, according to an embodiment, a NAN publisher 400 may include higher layers 401 and a NAN engine 403. A NAN subscriber 410 may include a NAN engine 411 and higher layers 413. Each of the NAN engine 403 and the NAN engine 411 may include a NAN discovery engine, ranging, a NAN data engine, a NAN scheduler, and/or a NAN MAC layer. The devices (e.g., the NAN publisher 400 and the NAN subscriber 410) of FIG. 4 may be NAN devices like the electronic devices 101, 102, 103, and 104 of FIG. 1 and the electronic devices 301, 302, and 303 of FIG. 3.

Operations 421 through 449 may be performed sequentially, but not be necessarily performed sequentially. For example, the order of operations 421 through 449 may be changed, or at least two operations thereof may be performed in parallel.

In operation 421, the higher layers 401 of NAN publisher 400 may transmit a publish message advertising at least one of at least one cipher suite identifier (CSID) or at least one useful security context identifier (SCID) supported to the NAN engine 403 of the NAN publisher 400. The useful SCID may include an SCID.

In operation 423, the higher layers 413 of the NAN subscriber 410 may transmit a subscribe message to the NAN engine 411 to actively search for the usefulness of a designated service.

In operation 425, the NAN engine 411 of the NAN subscriber 410 may transmit a subscribe message in a DW. In operation 427, the NAN engine 403 of the NAN publisher 400 may transmit the publish message in the DW.

In operation 429, the NAN engine 411 of the NAN subscriber 410 may generate a discovery result message based on the received publish message and transmit the generated discovery result message to the higher layers 413 of the NAN subscriber 410. The discovery result message may include, for example, at least one CSID or at least one SCID included in the publish message. The higher layers 413 of the NAN subscriber 410 may select a CSID and an SCID suitable for performing NDP negotiation and establishing a NAN pairwise security association (SA).

In operation 431, the higher layers 413 of the NAN subscriber 410 may transmit a data request message including the CSID, the SCID, and a pairwise master key (PMK) to the NAN engine 411 of the NAN subscriber 410. The message flow used together with NCS-SK to establish the NAN pairwise SA may have a similar form to the robust security network association (RSNA) 4-way handshake process defined in the IEEE 802.11 standard. A process that may correspond to the RSNA 4-way handshake process may include operation 433 of transmitting an NDP request message, operation 439 of transmitting an NDP response message, operation 441 of transmitting an NDP security confirmation message, and operation 443 of transmitting an NDP security install message.

In operation 433, the NAN engine 411 of the NAN subscriber 410 may transmit an NDP request message including the CSID, the SCID, and a key descriptor (Key Desc) to the NAN publisher 400.

In operation 435, the NAN engine 403 of the NAN publisher 400 may transmit a data indication message to the higher layers 401 of the NAN publisher 400 upon receiving the NDP request message. In operation 437, the higher layers 401 of the NAN publisher 400 receiving the data indication message from the NAN engine 403 of the NAN publisher 400 may transmit a data response message that is a response message to the data indication message to the NAN engine 403 of the NAN publisher 400. The data response message of operation 437 may include the SCID and the PMK.

In operation 439, the NAN engine 403 of the NAN publisher 400 receiving the data response message from the higher layers 401 of the NAN publisher 400 may transmit an NDP response message that is a response message to the NDP request message to the NAN subscriber 410. The NDP response message may include the CSID, the SCID, and Key Desc (Encr Data).

In operation 441, the NAN engine 411 of the NAN subscriber 410 receiving the NDP response message may transmit an NDP security confirmation message to the NAN publisher 400. The NDP security confirmation message may include Key Desc (Encr Data).

In operation 443, the NAN engine 403 of the NAN publisher 400 receiving the NDP security confirmation message may transmit an NDP security install message to the NAN subscriber 410. The NDP security install message may include Key Desc.

In operation 445, the NAN engine 403 of the NAN publisher 400 transmitting the NDP security installation message may transmit a data confirm message to the higher layers 401 of the NAN publisher 400. In operation 447, the NAN engine 411 of the NAN subscriber 410 receiving the NDP security installation message may transmit a data confirm message to the higher layers 413 of the NAN subscriber 410.

In operation 449, secure data communication may be performed between the NAN publisher 400 and the NAN subscriber 410. The SCID attribute field for the SCID used in the NAN security publish/subscribe message flow of FIG. 4 may be represented as shown in Table 1 below.

[Table 1]

| Field | Size (octets) | Value | Description |
|---|---|---|---|
| Security Context Identifier Type Length | 2 | Variable | Identifies the length of the Security Context Identifier field |
| Security Context Identifier Type | 1 | Variable | The type of Security Context Identifier. 0 - Reserved 1 - PMKID 2 - 255; Reserved |
| Publish ID | 1 | Variable | Identifies the Publish Service Instance |

(continued)

| Field | Size (octets) | Value | Description |
|---|---|---|---|
| Security Context Identifier | Variable | Variable | Identifies the Security Context. For NAN Shared Key Cipher Suite, this field contains the 16-octet PMKID identifying the PMK used for setting up the Secure Data Path. |

In Table 1, a Security Context Identifier Type Length field may be implemented with "2" octets and may be used to identify the length of the SCID field. In Table 1, a Security Context Identifier Type field may be implemented with "1" octet and may indicate the type of SCID. For example, when the field value of the Security Context Identifier Type field is "1", the Security Context Identifier Type field may indicate a pairwise master key identifier (PMKID). In Table 1, the Publish ID field may be implemented with "1" octet and may be used to identify a publish service instance. The Security Context Identifier field may be used to identify a security context. For NCS-SK, the Security Context Identifier field may include a "16" octet-PMKID identifying protected management frames (PMFs) used for setting up a secure data path.

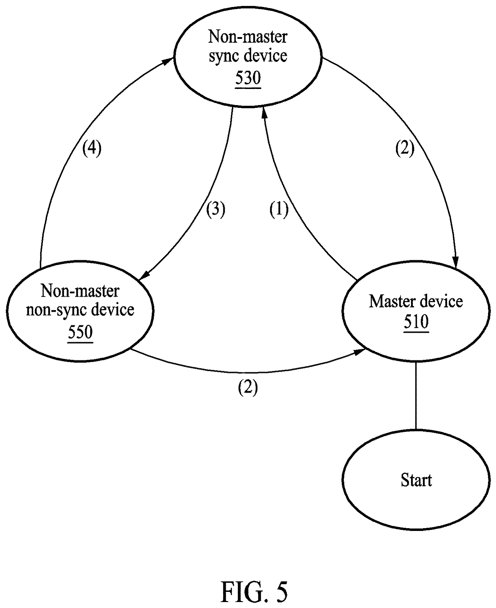

FIG. 5 is a diagram illustrating the role and state transitions of electronic devices included in a NAN cluster according to an embodiment.

Referring to FIG. 5, according to an embodiment, a NAN cluster (e.g., the NAN cluster 100 of FIG. 1) may include a master device 510, a non-master sync device 530, and a non-master non-sync device 550 performing respective roles. The roles (or states) of the electronic devices 510, 530, and 550 shown in FIG. 5 may be the roles (or states) of NAN devices (e.g., the electronic devices 101, 102, 103, and 104 of FIG. 1, the electronic devices 301, 302, and 303 of FIG. 3, or the devices 400 and 410 of FIG. 4).

According to an embodiment, the roles (or states) of the electronic devices 510, 530, and 550 may be transitioned based on whether a condition according to the NAN protocol is satisfied. For example, the NAN protocol defines conditions (e.g., RSSIs and/or master ranks) for transitions (e.g., (1), (2), (3), and (4)) of the states of electronic devices included in a cluster. However, not all the conditions defined in the NAN protocol will not be described in detail but will be described briefly hereinafter.

According to an embodiment, the roles of the electronic devices included in the NAN cluster may be determined based on the master ranks. For example, among the electronic devices included in the NAN cluster, an electronic device having the greatest master rank value may become the master device 510. A master rank may include factors such as a master preference (e.g., a value from between "0" and "128"), a random factor (e.g., a value between "0" and "255"), and/or a media access control (MAC) address (e.g., an interface address of a NAN electronic device). A master rank value may be calculated through Equation 1.

[Equation 1]

$$\text{Master Rank} = \text{Master Preference} * 2^{56} + \text{Random Factor} * 2^{48} + MAC[5] * 2^{40} + \ldots + MAC[0]$$

According to the NAN standard, the master rank according to the sum of the above factors may be calculated for each of the electronic devices synchronized with the cluster, and an electronic device having a relatively high master rank may have a role (or a state) of the master device 510. The electronic device having the highest master rank from among the plurality of electronic devices may perform the role of master device. The selection of the master device may not be solely dependent on the master rank. Instead, a plurality of factors may be considered when determining the master device including, but not limited to, a battery life of the electronic device. a processing speed of the electronic device, any other property of the electronic device, and a user preference.

According to an embodiment, whether the electronic devices synchronized with the cluster are able to transmit synchronization beacons (e.g., the synchronization beacons 210 of FIG. 2) and discovery beacons (e.g., the discovery beacons 230 of FIG. 2) may be determined according to the roles (or states) of the electronic devices. For example, the synchronization beacons may be transmitted by the master device 510 and the non-master sync device 530, and the discovery beacons may be transmitted by the master device 510. Whether the electronic devices are able to transmit discovery beacon frames and/or synchronization beacon frames may be determined according to their respective roles and states, which may be shown in Table 2 below.

[Table 2]

| Role and State | Discovery Beacon | Synchronization Beacon |
|---|---|---|
| Master | Able to transmit | Able to transmit |

(continued)

| Role and State | Discovery Beacon | Synchronization Beacon |
|---|---|---|
| Non-Master Sync | Unable to transmit | Able to transmit |
| Non-Master Non-Sync | Unable to transmit | Unable to transmit |

According to an embodiment, the size (or level) of a cluster class may be determined based on a master rank. For example, when the first master rank of a first master device synchronized with a first cluster is relatively high (or greater) compared to the second master rank of a second master device synchronized with a second cluster, the class of the first cluster may be understood as being relatively high (or greater) compared to the class of the second cluster. The class of the cluster may be determined by a master rank calculated using only a master preference among the factors of the master rank. If the master rank of the first cluster and the master rank of the second cluster have the same value, the class relationship between the first cluster and the second cluster may be determined by a master rank calculated using the remaining factors (e.g., a random factor and/or a MAC address) of the master rank.

According to an embodiment, the class of the cluster may be determined based on the number of electronic devices synchronized with the cluster, the number of proximity services provided by the cluster, and/or the security level of the cluster, regardless of the master rank. For example, if the number of electronic devices synchronized with the cluster is large, the number of proximity services provided by the cluster is large, and/or the security level of the cluster is high (or large), the cluster may be determined to have a high (or large) class.

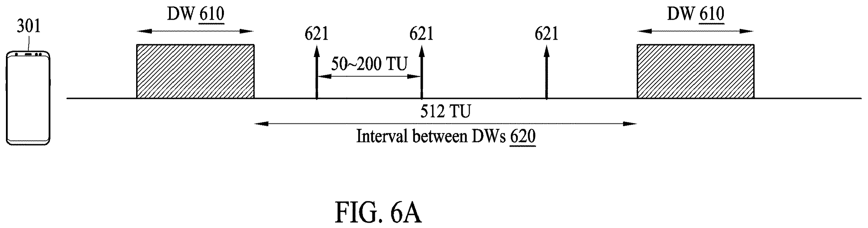

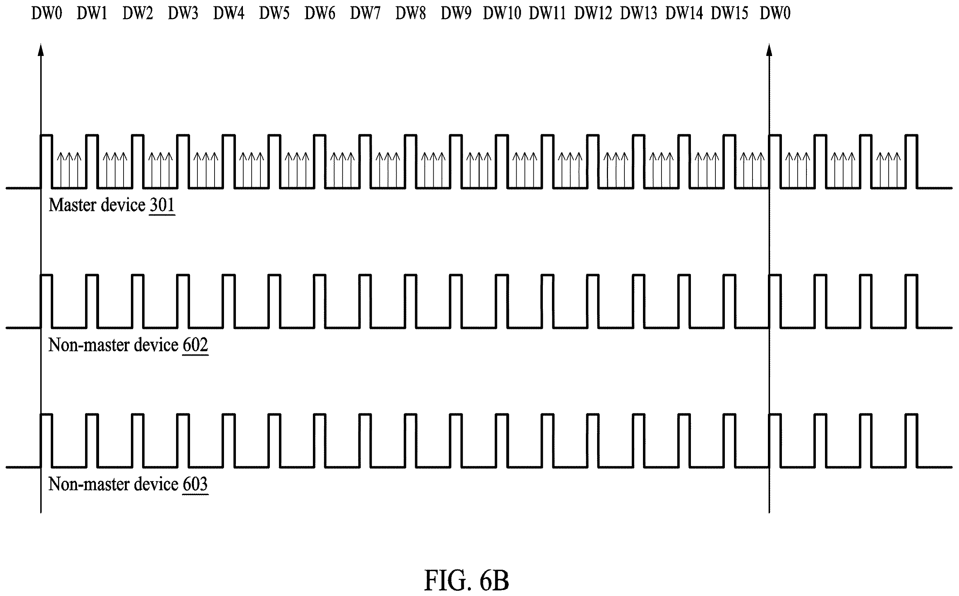

FIGS. 6A and 6B are diagrams illustrating the discovery beacon transmission of a master device.

According to an embodiment, devices 301, 602, and 603 shown in FIGS. 6A and 6B may be NAN devices like the electronic devices 101, 102, 103, and 104 of FIG. 1, the electronic devices 301, 302, and 303 of FIG. 3, and the devices (e.g., the NAN publisher 400 and the NAN subscriber 410) of FIG. 4. A NAN device may be a device supporting NAN, which is low-power discovery technology. The master device 301 and the non-master devices 602 and 603 may be synchronized with one NAN cluster (e.g., the NAN cluster 100 of FIG. 1).

Referring to FIG. 6A, according to an embodiment, the master device 301 may periodically transmit discovery beacons 621 for an interval between DWs 620. The transmission cycle of the discovery beacons 621 may be "50" to "200" TUs. The interval between DWs 620 may be "512" TUs, and the master device 301 may transmit the discovery beacons 621 "2" to "10" times during the interval between DWs 620. As described above with reference to FIG. 2, the NAN protocol may cause a NAN device to operate in an active state during a DW 610 and operate in a low-power state (e.g., a sleep state) for the interval between DWs 620. However, the master device 301 may need to be activated "2" to "10" times for the interval between DWs 620 for periodically transmitting the discovery beacons 621. The master device 301 may consume greater current compared to the non-master devices 602 and 603. This is because the master device is operated in an active (relatively high power) state for a plurality of time periods during the interval between DWs whereas the non-master devices are able to remain in a low-power state such as a sleep state for all or a large portion of the interval between the DWs.

Referring to FIG. 6B, according to an embodiment, DWs (e.g., DW0 to DW15) and discovery beacons transmitted by the master device 301 (e.g., the discovery beacons 621 transmitted by the master device 301 for the interval between DWs 620) are shown. The non-master devices 602 and 603 may be activated only in a portion of the DWs (e.g., DW0 to DW15). However, the master device 301 may be activated during all DWs. The master device 301 may need to be activated during all DWs and may need to be activated intermittently even for an interval between DWs. The master device 301 may consume greater current compared to the non-master devices 602 and 603.

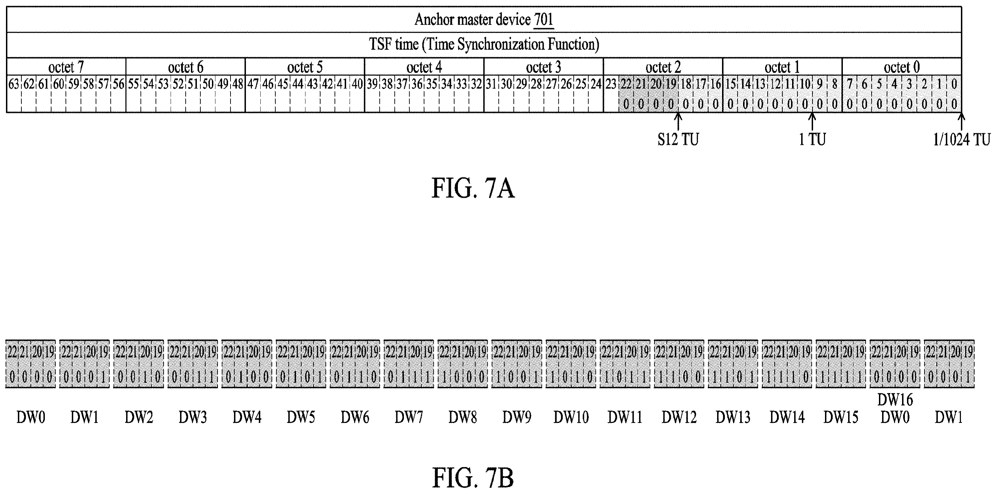

FIGS. 7A and 7B are diagrams illustrating a time synchronization function (TSF) used for time synchronization in a NAN cluster according to an embodiment.

According to an embodiment, NAN devices (e.g., the electronic devices 101, 102, 103, and 104 of FIG. 1, the electronic devices 301, 302, and 303 of FIG. 3, the electronic devices 400 and 410 of FIG. 4, and the devices 602 and 603 of FIG. 6) may each operate a TSF timer (e.g., a local TSF timer). The TSF timer may correspond to a clock. As time passes, TSF timer information (e.g., a 64-bit TSF timer value) may change constantly.

According to an embodiment, the lower "23" bits (e.g., "0" bits to "22" bits) of the 64-bit TSF timer information may be used for time synchronization. "1/1024" TUs to "512" TUs may be expressed using "0" bits to "18" bits of the TSF timer information. The DWs (e.g., DW0 to DW15) may be expressed using "19" bits to "22" bits of the TSF timer information. When NAN devices and the anchor master device 701 are synchronized with the same NAN cluster, the NAN devices may be time-synchronized based on TSF timer information of the anchor master device 701.

The TSF timer information of the anchor master device 701 shown in FIG. 7A may be TSF timer information at a start time of DW1. A total of "16" DWs (e.g., DW0 to DW15) may be repeated in the NAN protocol. Portions of the TSF timer information shown in FIG. 7B (e.g., "19" bits to "22" bits of the timer information) may correspond to the DWs (e.g., DW0 to DW15), respectively.

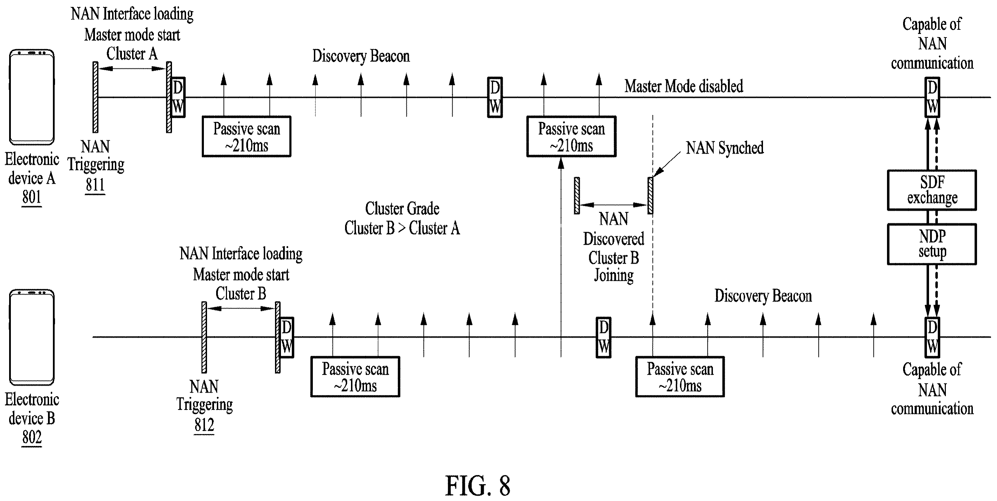

FIG. 8 is a diagram illustrating an operation of forming a NAN cluster.

Referring to FIG. 8, an electronic device A 801 and an electronic device B 802 may form a NAN cluster. The electronic device A 801 and the electronic device B 802 may be NAN terminals that support NAN, like the electronic devices 101, 102, 103, and 104 of FIG. 1, the electronic devices 301, 302, and 303 of FIG. 3, the electronic devices 400 and 410 of FIG. 4, and the electronic devices 602 and 603 of FIG. 6.

The electronic device A 801 and the electronic device B 802 may be NAN-triggered at different times, in operations 811 and 812. The electronic device A 801 and the electronic device B 802 may each activate a master mode. The electronic device A 801 and the electronic device B 802 may form a NAN cluster A and a NAN cluster B, respectively. The electronic device A 801 and the electronic device B 802 may each periodically transmit discovery beacons for an interval between DWs. The electronic device A 801 and the electronic device B 802 may each perform passive scanning periodically (e.g., about 210 ms). The electronic device A 801 may receive the discovery beacons transmitted by the electronic device B 802. The electronic device B 802 may receive the discovery beacons transmitted by the electronic device A 801. The electronic device A 801 and the electronic device B 802 may each compare the cluster class of the NAN cluster A formed by the electronic device A 801 and the cluster class of the NAN cluster B formed by the electronic device B 802. Through the comparison of the cluster classes, an electronic device (e.g., the electronic device A 801 or the electronic device B 802) may determine whether to maintain the master mode. Since the method of comparing the cluster classes has been described with reference to FIG. 3, a detailed description thereof will be omitted. For example, when the class of the cluster B is higher than that of the cluster A, the electronic device B 802 forming the cluster B may be set as a master device. The electronic device B 802 may maintain the master mode, and the electronic device A 801 may turn off the master mode and then be synchronized with the cluster B. After the electronic device A 801 is synchronized (e.g., time-synchronized or channel-synchronized) with the cluster B, NDP setup may be performed.

As described above with reference to FIG. 8, it may take a lot of time until the electronic device A 801 and the electronic device B 802 are capable of NAN-based communication after NAN triggering. After NAN triggering, it may take a lot of time to activate a NAN interface, perform passive scanning, perform a cluster class comparison, and perform synchronization (e.g., time synchronization or channel synchronization). If there is an issue with beacon reception due to congestion in the network environment, it may take more time. Further, as described above with reference to FIG. 6, the electronic device B 802 (e.g., the master device) may need to be activated during all DWs and also need to be activated intermittently even for an interval between DWs. The electronic device B 802 (e.g., the master device) may consume greater current compared to the electronic device A 801 (e.g., the non-master device) as maintaining the cluster B (e.g., continuously performing synchronization between the electronic device A 801 and the electronic device B 802 included in the NAN cluster B).

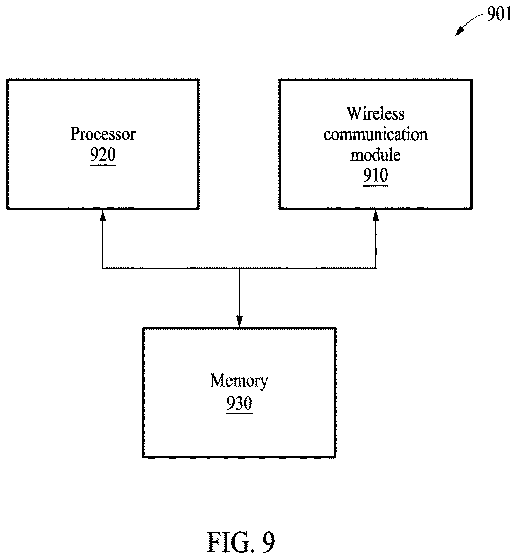

FIG. 9 is a schematic block diagram of an electronic device according to an embodiment.

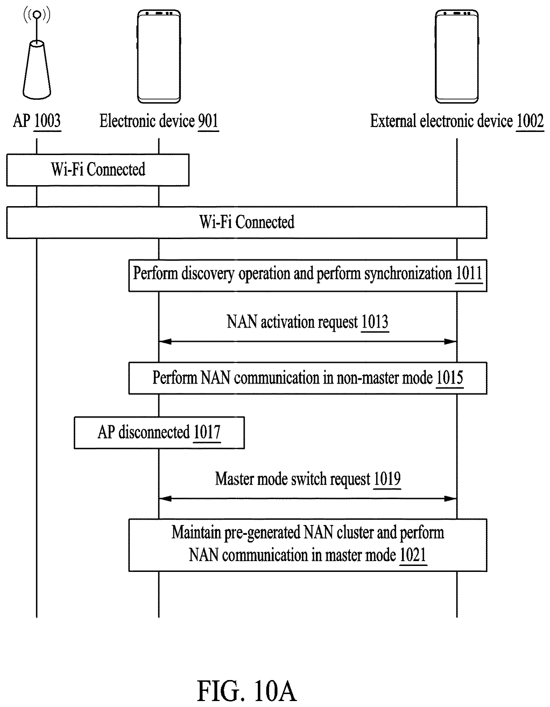

According to an embodiment, an electronic device 901 may quickly form a NAN cluster. When forming a NAN cluster, the electronic device 901 may utilize TSF timer information of an access point (AP) (e.g., an AP 1003 of FIG. 10A). The electronic device 901 may form a NAN cluster using the TSF timer information of the AP, thereby performing NAN-based communication immediately after NAN triggering without a time delay. Advantageously, performing NAN-based communication without a time delay reduces an overall current consumption of an electronic device compared to instances where there is a time delay. The electronic device 901 may use the TSF timer information of the AP to maintain the NAN cluster (e.g., perform continuous synchronization between the devices included in the NAN cluster). The NAN cluster may be maintained in a non-master mode based on the TSF timer information of the AP. In an embodiment, if the NAN cluster is maintained in the non-master mode, it may indicate the NAN cluster includes only non-master devices. The NAN cluster including only non-master devices may be one that reduces the excessive current consumption of a master device. That is, a NAN cluster including only non-master devices has an overall reduced consumption than a NAN cluster containing a master device because a master device has a higher current consumption than a non-master device. While the NAN cluster is maintained in the non-master mode, a master device of the NAN cluster may be predetermined. When the NAN cluster cannot be maintained in the non-master mode (e.g., when the electronic device 901 is disconnected from the AP), the NAN cluster may be maintained in a master mode based on TSF timer information of the predetermined master device. In an embodiment, if the NAN cluster is maintained in the master mode, it may indicate the NAN cluster includes at least one master device. By predetermining the master device of the NAN cluster while the NAN cluster is maintained in the non-master mode, it is possible to prevent a time delay from occurring when changing the mode of the NAN cluster.

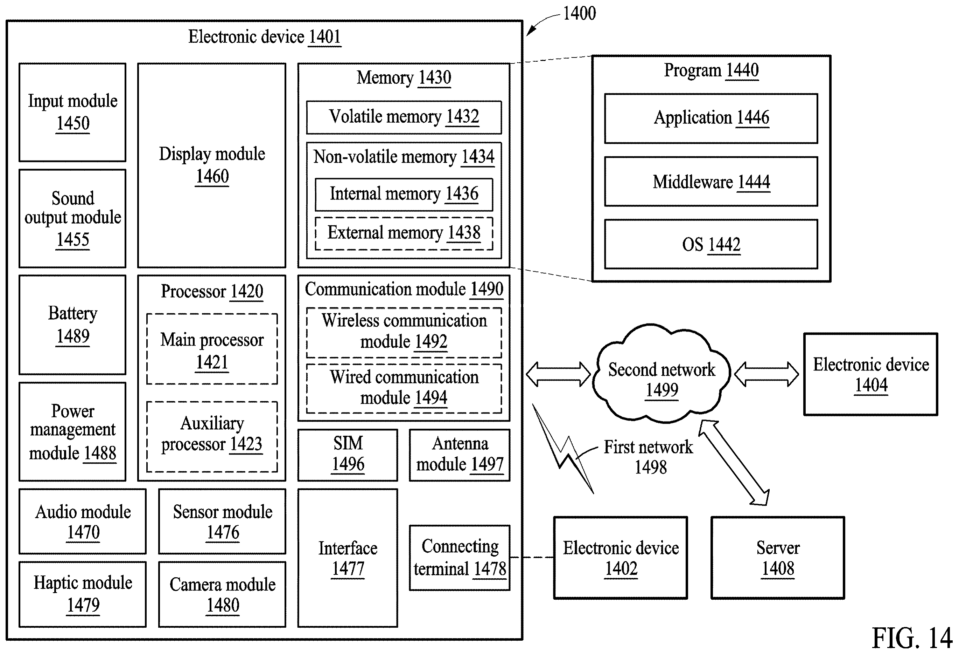

According to an embodiment, the electronic device 901 may include a wireless communication module 910 (e.g., a wireless communication module 1492 of FIG. 14), a processor 920 (e.g., a processor 1420 of FIG. 14), and a memory 930 (e.g., a memory 1430 of FIG. 14). The wireless communication module 910 may be configured to transmit and receive a wireless signal. The processor 920 may be electrically and/or operatively connected to the wireless communication module 910. The memory 930 may be electrically and/or operatively connected to the processor 920 and may store instructions executable by the processor 920. The electronic device 901 may correspond to an electronic device described in FIG. 14 (e.g., an electronic device 1401 of FIG. 14). Therefore, a duplicate description of such described in FIG. 14 will be omitted.

According to an embodiment, the electronic device 901 and an external electronic device (e.g., an external electronic device 1002 of FIG. 10A) may be connected to the same AP (e.g., the AP 1003 of FIG. 10A) (e.g., see FIG. 10A). Hereinafter, a description will be provided on the assumption that the electronic device 901 and the external electronic device are connected to the same AP.

According to an embodiment, the processor 920 may perform a discovery operation to find an external electronic device connected to an AP that is the same as the AP connected to the electronic device 901. That is, the processor of an electronic device may perform a discovery operation to find an external electronic device connected to the same AP as the electronic device. The processor 920 may advertise information about the AP connected to the electronic device 901 through the discovery operation. The processor 920 may exchange the information about the AP (e.g., a basic service set identifier (BSSID) or AP channel information) with the external electronic device through an out-of-band (OOB) protocol or an IP-based discovery protocol (e.g., a universal plug and play (UPNP) protocol), a multicast domain name system (mDNS) protocol, or a bonjour protocol).

According to an embodiment, the processor 920 may perform a discovery operation to find an external electronic device executing an application that is the same as the application being executed by the electronic device 901. In changing the information about the AP with the external electronic device, the processor 920 may exchange service information (e.g., a server name or an application name) corresponding to the application being executed on the device (e.g., the electronic device 901 or the external electronic device) together. The application may require NAN-based communication.

According to an embodiment, in exchanging the information about the AP and the service information with the external electronic device, the processor 920 may exchange TSF timer associated information of the AP together. The TSF timer associated information of the AP may be information used for synchronization between the electronic device 901 and the external electronic device. The electronic device 901 may transmit TSF offset information obtained based on the TSF timer information of the electronic device 901 and the TSF timer information of the AP to the external electronic device. The electronic device 901 may receive TSF offset information obtained based on the TSF timer information of the external electronic device and the TSF timer information of the AP to the external electronic device.

According to an embodiment, the discovery operation performed by the processor 920 may be performed before NAN triggering for NAN-based communication. For example, the discovery operation performed by the processor 920 may be performed at the time when the application (e.g., an application requiring NAN-based communication) is first executed or when the application makes the request. For example, the discovery operation performed by the processor 920 may be periodically performed when connected to the AP. However, the time when the discovery operation is performed is not limited to the above example.

According to an embodiment, when the AP connected to the electronic device 901 is the same as the AP connected to the external electronic device (and/or when the application being executed on the electronic device 901 is the same as the application being executed on the external electronic device), synchronization between the electronic device 901 and the external electronic device may be performed. The synchronization between the electronic device 901 and the external electronic device may be performed by synchronizing a TSF timer of the electronic device 901 and a TSF timer of the external electronic device. The synchronization between the electronic device 901 and the external electronic device may be synchronizing a DW start time of the electronic device 901 and a DW start time of the external electronic device. The synchronization of the electronic device 901 and the external electronic device may be performed before NAN triggering for NAN-based communication. In addition, the DW duration of the electronic device 901 may be synchronized with the DW duration of the external electronic device.

According to an embodiment, as the synchronization between the electronic device 901 and the external electronic device is performed before NAN triggering, NAN-based communication may be performed without a time delay. After the synchronization between the electronic device 901 and the external electronic device is performed and before NAN triggering, the electronic device 901 may also perform SDF exchange with the external electronic device and/or NDP setup in advance. By performing SDF exchange and/or NDP setup in advance before NAN triggering, the electronic device 901 may perform NAN-based communication faster than when SDF exchange and/or NDP setup are not performed in advance. In a state where a NAN cluster is not formed, the electronic device 901 and the external electronic device may also exchange information about the cluster and/or an ID of the cluster in advance. The ID of the cluster may be a value used for SDF and NDP communication.

According to an embodiment, the electronic device 901 and the external electronic device may stand by while maintaining a non-master state before NAN-based communication according to NAN triggering. The electronic device 901 and the external electronic device that are synchronized may maintain substantially the same state as a non-master device of the NAN cluster. The electronic device 901 and the external electronic device may be activated only in part of a synchronized time duration (e.g., a DW). The electronic device 901 and the external electronic device may stand by while receiving only signals transmitted through a designated channel (e.g., Channel 6 (Ch6)). After NAN-based communication according to NAN triggering starts, the active DW and the channel of the electronic device 901 and the external electronic device may be adjusted.

According to an embodiment, a NAN cluster may be formed after the synchronization of the electronic device 901 and the external electronic device is performed. When the synchronization between the electronic device 901 and the external electronic device is completed, it may indicate a NAN cluster is formed. The synchronization operation and the NAN cluster forming operation are not different operations, and the result of performing the synchronization may be the NAN cluster. As described above, the NAN cluster may be formed based on the TSF timer associated information (e.g., the TSF offset value) of the AP. The NAN cluster may include only non-master devices. After the NAN cluster is formed, the electronic device 901 and the external electronic device included in the NAN cluster may monitor AP beacons transmitted by the AP. AP beacon monitoring may be performed in every beacon transmission cycle. AP beacon monitoring may not be performed in every beacon transmission cycle, but may be performed in every designated cycle (e.g., a multiple of the beacon transmission cycle). The electronic device 901 and the external electronic device may synchronize the TSF timer of the electronic device 901 and the TSF timer of the external electronic device based on the TSF timer information of the AP included in the AP beacons. That is, the NAN cluster may be maintained in a non-master mode (e.g., perform continuous synchronization between the devices included in the NAN cluster) based on the TSF timer information of the AP.

According to an embodiment, while the NAN cluster is maintained in the non-master mode, the electronic device 901 and the external electronic device may exchange master ranks. The electronic device 901 and the external electronic device may predetermine a master device of the NAN cluster based on their respective master ranks. Since the operation of determining a master device based on master ranks has been described with reference to FIG. 3, a detailed description thereof will be omitted.

According to an embodiment, when the NAN cluster cannot be maintained in the non-master mode (e.g., when the electronic device 901 is disconnected from the AP), the NAN cluster may be maintained in a master mode (e.g., perform continuous synchronization between the devices included in the NAN cluster) based on TSF timer information of the predetermined master device. By using the master device of the NAN cluster predetermined while the NAN cluster is maintained in the non-master mode, it is possible to prevent a time delay from occurring when changing the mode of the NAN cluster (e.g., from the non-master mode to the master mode).

FIGS. 10A to 10C are diagrams illustrating an operating method of an electronic device according to an embodiment.

Referring to FIG. 10A, according to an embodiment, the electronic device 901 and an external electronic device 1002 may be connected to the same AP 1003. The electronic device 901 and the external electronic device 1002 may form a NAN cluster based on TSF timer associated information of the AP 1003.

Operations 1011 through 1021 may be performed sequentially, but not necessarily performed sequentially. For example, operations 1011 through 1021 may be performed in different orders, and at least two operations thereof may be performed in parallel.

In operation 1011, the electronic device 901 and the external electronic device 1002 may perform a discovery operation and a synchronization operation, respectively. The discovery operation may be performed to find another device (e.g., the external electronic device 1002) connected to the AP 1003 to which a device (e.g., the electronic device 901) is connected. The synchronization operation may be an operation of synchronizing a TSF timer of the electronic device 901 and a TSF timer of the external electronic device 1002 when the electronic device 901 and the external electronic device 1002 are connected to the same AP 1003 (and/or execute the same application). The discovery operation and the synchronization operation may be performed before NAN triggering for NAN-based communication. Since the discovery operation and the synchronization operation have been described with reference to FIG. 9, detailed descriptions thereof will be omitted. When the synchronization between the electronic device 901 and the external electronic device 1002 is completed, it may indicate a NAN cluster is formed. The synchronization operation and the NAN cluster forming operation are not different operations, and the result of performing the synchronization may be the NAN cluster.

In operation 1013, the electronic device 901 and the external electronic device 1002 may each receive a NAN activation request (e.g., NAN triggering).

In operation 1015, the electronic device 901 and the external electronic device 1002 may perform NAN communication in a non-master mode in response to the NAN triggering. The NAN cluster may be maintained in the non-master mode (e.g., perform continuous synchronization between the devices included in the NAN cluster) based on the TSF timer information of the AP 1003. The NAN cluster maintained in the non-master mode may include only non-master devices. The NAN cluster including only non-master devices may be one that reduces the excessive current consumption of a master device. The electronic device 901 and the external electronic device 1002 included in the NAN cluster may periodically monitor the AP beacons transmitted by the AP 1003, thereby maintaining the synchronization between the TSF timer of the electronic device 901 and the TSF timer of the external electronic device 1002 based on the TSF timer information included in the AP beacons. That is, the NAN cluster maintained in the non-master mode may be maintained based on the TSF timer information of the AP 1003.

In operation 1017, the electronic device 901 may be disconnected from the AP 1003. In this case, the electronic device 901 may be unable to monitor the AP beacons. The electronic device 901 may be unable to maintain the synchronization between the TSF timer of the electronic device 901 and the TSF timer of the external electronic device 1002 based on the TSF timer information of the AP 1003 included in the AP beacons. Accordingly, while the NAN cluster is maintained in the non-master mode (e.g., while operation 1015 is performed), the electronic device 901 and the external electronic device 1002 may exchange master ranks. The electronic device 901 and the external electronic device 1002 may predetermine a master device of the NAN cluster based on their respective master ranks. After disconnected from the AP 1003, the electronic device 901 and the external electronic device 1002 may each operate as a master device while maintaining the TSF timer information of the AP 1003. The electronic device 901 and the external electronic device 1002 operating as master devices may determine the master device of the NAN cluster after comparing their respective master ranks.

In operation 1019, the electronic device 901 (e.g., the electronic device 901 unable to use the TSF timer information of the AP 1003) and the external electronic device 1002 included in the NAN cluster may receive a master mode switch request. The master mode switch request may be performed using SDFs, NAFs, and/or the OOB protocol.

In operation 1021, the electronic device 901 and the external electronic device 1002 may maintain the NAN cluster formed in operation 1011. In operation 1021, the NAN cluster may be maintained in a master mode based on TSF timer information of the predetermined master device.

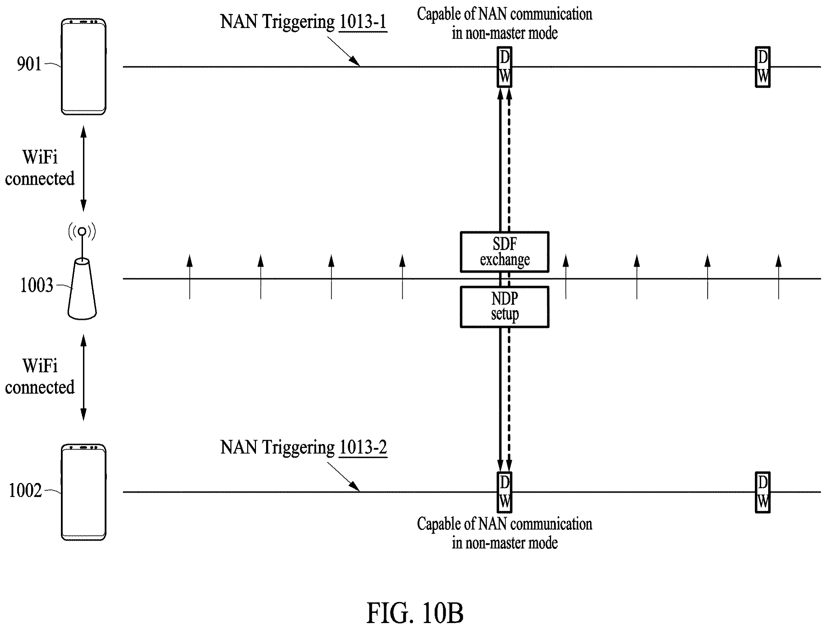

Referring to FIG. 10B, according to an embodiment, the electronic device 901 and the external electronic device 1002 may form a NAN cluster based on TSF timer associated information of the AP 1003. The electronic device 901 and the external electronic device 1002 may be connected to the same AP 1003. The electronic device 901 and the external electronic device 1002 may each be NAN-triggered at different times, in operations 1013-1 and 1013-2. The electronic device 901 and the external electronic device 1002 may perform a discovery operation and a synchronization operation in advance before NAN triggering, thereby performing NAN-based communication immediately after NAN triggering.

According to an embodiment, the electronic device 901 and the external electronic device 1002 may perform NAN-based communication immediately after NAN triggering. The NAN cluster including the electronic device 901 and the external electronic device 1002 may include only non-master devices, and the NAN cluster may be one that reduces the current consumption of a master device. Referring to the comparative embodiment of FIG. 8, the electronic device 901 and the external electronic device 1002 may perform NAN-based communication without a time delay immediately after NAN triggering and form a NAN cluster that does not require a master device.

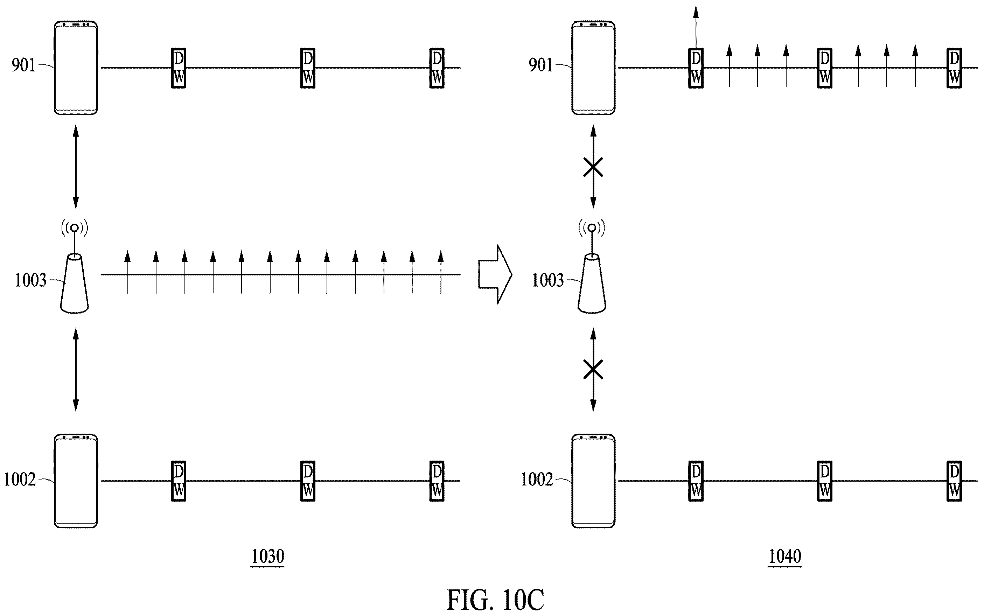

Referring to FIG. 10C, according to an embodiment, a situation 1030 may be a situation in which the electronic device 901 and the external electronic device 1002 are connected to the same AP 1003. The electronic device 901 and the external electronic device 1002 may be included in a NAN cluster. The AP 1003 may periodically transmit AP beacons, and the electronic device 901 and the external electronic device 1002 may monitor the AP beacons. The NAN cluster may be synchronized based on TSF timer information of the AP 1003 included in the AP beacons. In the situation 1030, the NAN cluster may be maintained in a non-master mode (e.g., perform continuous synchronization between the devices included in the NAN cluster) based on the TSF timer information of the AP 1003.

According to an embodiment, a situation 1040 may be a situation in which the electronic device 901 and the external electronic device 1002 are disconnected from the AP 1003. The electronic device 901 and the external electronic device 1002 may still be included in the NAN cluster. While the NAN cluster is maintained in a non-master mode (e.g., in the situation 1030), a master device (e.g., the electronic device 901) of the NAN cluster may be predetermined based on the master preference of the electronic device 901 and the master preference of the external electronic device 1002. The NAN cluster may be synchronized based on TSF timer information of the master device (e.g., the electronic device 901). In the situation 1030, the NAN cluster may be maintained in a master mode (e.g., perform continuous synchronization between the devices included in the NAN cluster) based on the TSF timer information of the master device (e.g., the electronic device 901). By predetermining the master device (e.g., the electronic device 901) of the NAN cluster while the NAN cluster is maintained in the non-master mode (e.g., the situation 1030), it is possible to prevent a time delay when changing the mode of the NAN cluster.

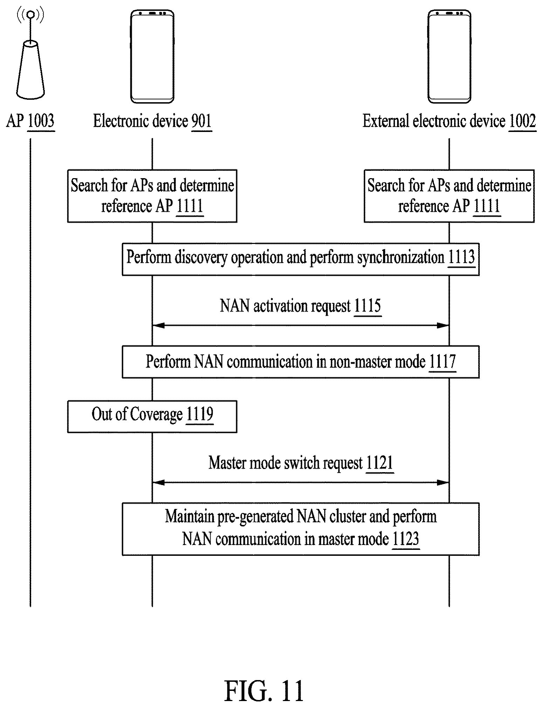

FIG. 11 is a diagram illustrating an operating method of an electronic device according to an embodiment.

Referring to FIG. 11, according to an embodiment, the electronic device 901 and the external electronic device 1002 may not be connected to the AP 1003. Alternatively, only one of the electronic device 901 and the external electronic device 1002 may be connected to the AP 1003. The electronic device 901 and the external electronic device 1002 may form a NAN cluster based on TSF timer associated information of a reference AP(e.g., the AP 1003 of FIG. 10A).

Operations 1111 through 1123 may be performed sequentially, but not necessarily performed sequentially. For example, operations 1111 through 1123 may be performed in different orders, and at least two operations thereof may be performed in parallel.

In operation 1111, the electronic device 901 and the external electronic device 1002 may search APs and determine a reference AP. The electronic device 901 and the external electronic device 1002 may receive AP signals (e.g., AP beacons). The electronic device 901 and the external electronic device 1002 may determine the AP 1003 that transmits an AP signal having a maximum received signal strength indicator (RSSI) among the AP signals received by the electronic device 901 and the external electronic device 1002 together to be a reference AP. Alternatively, the electronic device 901 and the external electronic device 1002 may determine APs that transmit AP signals having maximum RSSIs among the AP signals received respectively by the electronic device 901 and the external electronic device 1002 to be temporary reference APs, and determine one (e.g., the AP 1003) of the temporary reference APs to be the reference AP. Alternatively, when one of the electronic device 901 and the external electronic device 1002 is connected to the AP 1003, the connected AP 1003 may be determined to be the reference AP.

In operation 1113, the electronic device 901 and the external electronic device 1002 may perform a discovery operation and a synchronization operation, respectively. The discovery operation and the synchronization operation may be substantially the same as those performed in operation 1011 of FIG. 10A. However, in addition, the electronic device 901 and the external electronic device 1002 may exchange the monitoring cycles of AP beacons for maintaining the synchronization of the NAN cluster. When the synchronization between the electronic device 901 and the external electronic device 1002 is completed, it may indicate a NAN cluster is formed. The synchronization operation and the NAN cluster forming operation are not different operations, and the result of performing the synchronization may be the NAN cluster.

In operation 1115, the electronic device 901 and the external electronic device 1002 may each receive a NAN activation request (e.g., NAN triggering).

In operation 1117, the electronic device 901 and the external electronic device 1002 may perform NAN communication in a non-master mode. The NAN cluster may be maintained in the non-master mode based on the TSF timer information of the reference AP 1003. The non-master mode maintaining operation may be substantially the same as operation 1015 of FIG. 10A.

In operation 1119, when the electronic device 901 is out of the coverage of the reference AP 1003 (e.g., when the electronic device 901 is far from the reference AP 1003), the electronic device 901 may be unable to monitor the AP beacons. The electronic device 901 may be unable to maintain the synchronization between the TSF timer of the electronic device 901 and the TSF timer of the external electronic device 1002 based on the TSF timer information included in the AP beacons. Accordingly, while the NAN cluster is maintained in the non-master mode (e.g., while operation 1117 is performed), the electronic device 901 and the external electronic device 1002 may exchange master ranks. The electronic device 901 and the external electronic device 1002 may predetermine a master device of the NAN cluster based on their respective master ranks.

In operation 1121, the electronic device 901 (e.g., the electronic device 901 unable to use the TSF timer information of the reference AP 1003) and the external electronic device 1002 included in the NAN cluster may receive a master mode switch request.

In operation 1123, the electronic device 901 and the external electronic device 1002 may maintain the NAN cluster formed in operation 1113. In operation 1123, the NAN cluster may be maintained in a master mode based on TSF timer information of a predetermined master device.

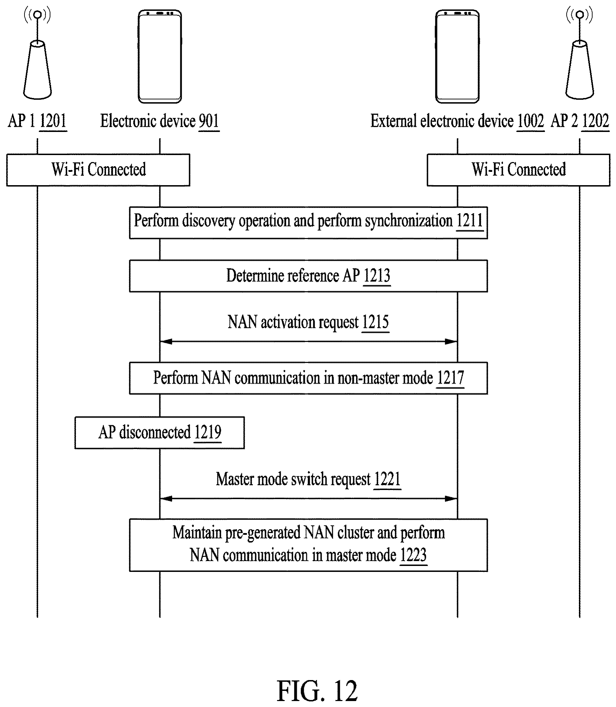

FIG. 12 is a diagram illustrating an operating method of an electronic device according to an embodiment.

Referring to FIG. 12, according to an embodiment, the electronic device 901 may be connected to AP1 1201, and the external electronic device 1002 may be connected to AP2 1202. The electronic device 901 and the external electronic device 1002 may form a NAN cluster based on TSF timer associated information of a reference AP (e.g., AP1 1201).

Operations 1211 through 1223 may be performed sequentially, but not necessarily performed sequentially. For example, operations 1211 through 1223 may be performed in different orders, and at least two operations thereof may be performed in parallel.

In operation 1211, the electronic device 901 and the external electronic device 1002 may perform a discovery operation and a synchronization operation, respectively. The discovery operation and the synchronization operation may be substantially the same as those performed in operation 1011 of FIG. 10A. When the synchronization between the electronic device 901 and the external electronic device 1002 is completed, it may indicate a NAN cluster is formed. The synchronization operation and the NAN cluster forming operation are not different operations, and the result of performing the synchronization may be the NAN cluster.

In operation 1213, the electronic device 901 and the external electronic device 1002 may determine a reference AP. The electronic device 901 and the external electronic device 1002 may exchange AP information included in AP signals (e.g., beacons from AP1 1201 and beacons from AP2 1202), thereby determining the reference AP (e.g., AP1 1201) from among AP1 1201 and AP2 1202. For example, the electronic device 901 and the external electronic device 1002 may determine the reference AP (e.g., AP1 1201) based on the strengths (e.g., maximum RSSIs) of the AP signals (e.g., the beacons from AP1 1201 and the beacons from AP2 1202).

In operation 1215, the electronic device 901 and the external electronic device 1002 may each receive a NAN activation request (e.g., NAN triggering).

In operation 1217, the electronic device 901 and the external electronic device 1002 may perform NAN communication in a non-master mode. The electronic device 901 and the external electronic device 1002 may be already synchronized based on TSF timer associated information (e.g., TSF offset information) of the reference AP (e.g., AP1 1201). The NAN cluster may be maintained in a non-master mode based on the TSF timer information of the reference AP (e.g., AP1 1201). The non-master mode maintaining operation may be substantially the same as operation 1015 of FIG. 10A.

In operation 1219, when the electronic device 901 is disconnected from AP1 1201, the electronic device 901 may be unable to monitor the AP beacons. The electronic device 901 may be unable to maintain the synchronization between the TSF timer of the electronic device 901 and the TSF timer of the external electronic device 1002 based on the TSF timer information included in the AP beacons. Accordingly, while the NAN cluster is maintained in the non-master mode (e.g., while operation 1217 is performed), the electronic device 901 and the external electronic device 1002 may exchange master ranks. The electronic device 901 and the external electronic device 1002 may predetermine a master device of the NAN cluster based on their respective master ranks.

In operation 1221, the electronic device 901 (e.g., the electronic device 901 unable to use the TSF timer information of the reference AP (e.g., AP1 1201)) and the external electronic device 1002 included in the NAN cluster may receive a master mode switch request.

In operation 1223, the electronic device 901 and the external electronic device 1002 may maintain the NAN cluster formed in operation 1211. In operation 1223, the NAN cluster may be maintained in a master mode based on TSF timer information of a predetermined master device.

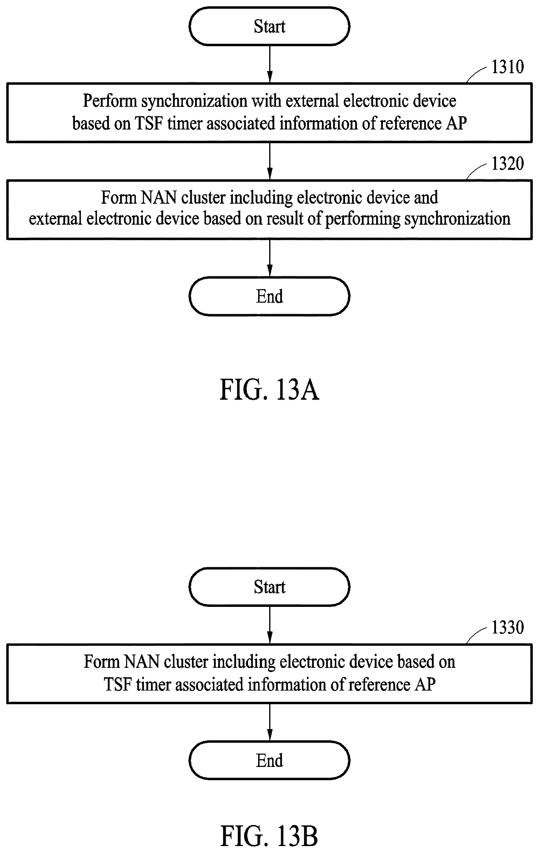

FIG. 13A is a flowchart illustrating an example of an operating method of an electronic device according to an embodiment.

Operations 1310 and 1320 may be performed sequentially, but not necessarily performed sequentially. For example, operations 1310 through 1320 may be performed in different orders, and two operations thereof may be performed in parallel.

In operation 1310, an electronic device (e.g., the electronic device 901 of FIG. 9) may perform synchronization with an external electronic device (e.g., the external electronic device 1002 of FIG. 10A) based on TSF timer associated information of a reference AP (e.g., the AP 1003 of FIG. 10A). The electronic device 901 may perform synchronization when an application being executed by the electronic device 901 is the same as an application being executed by the external electronic device 1002, before NAN triggering for NAN-based communication. The electronic device 901 may synchronize a DW start time of the electronic device 901 with a DW start time of the external electronic device 1002 by synchronizing a TSF timer of the electronic device 901 with a TSF timer of the external electronic device 1002.

In operation 1320, the electronic device 901 may form a NAN cluster including the electronic device 901 and the external electronic device 1002 based on a result of performing the synchronization. When the synchronization between the electronic device 901 and the external electronic device 1002 is completed, it may indicate a NAN cluster is formed. The synchronization operation and the NAN cluster forming operation are not different operations, and the result of performing the synchronization may be the NAN cluster. The NAN cluster may be maintained in a non-master mode based on the TSF timer information of the reference AP 1003. The NAN cluster may be maintained in a master mode based on TSF timer information of a predetermined master device when the electronic device 901 is unable to receive a signal from the reference AP 1003.

FIG. 13B is a flowchart illustrating an example of an operating method of an electronic device according to an embodiment.

In operation 1330, an electronic device (e.g., the electronic device 901 of FIG. 9) may form a NAN cluster including the electronic device 901 based on TSF timer associated information of a reference AP (e.g., the AP 1003 of FIG. 10A). The NAN cluster may be maintained in a non-master mode based on TSF timer information of the reference AP 1003 or maintained in a master mode based on TSF timer information of a master device of the NAN cluster. The electronic device 901 may form the NAN cluster using the TSF timer information of the reference AP 1003, thereby performing NAN-based communication immediately after NAN triggering without a time delay. The electronic device 901 may use the TSF timer information of the reference AP 1003 to maintain the NAN cluster (e.g., perform continuous synchronization between the devices included in the NAN cluster). The NAN cluster may be maintained in the non-master mode based on the TSF timer information of the reference AP 1003. If the NAN cluster is maintained in the non-master mode, it may indicate the NAN cluster includes only non-master devices. The NAN cluster including only non-master devices may be one that reduces the excessive current consumption of a master device. While the NAN cluster is maintained in the non-master mode, a master device of the NAN cluster may be predetermined. When the NAN cluster cannot be maintained in the non-master mode (e.g., when the electronic device 901 is disconnected from the AP), the NAN cluster may be maintained in a master mode based on TSF timer information of the predetermined master device. By predetermining the master device of the NAN cluster while the NAN cluster is maintained in the non-master mode, it is possible to prevent a time delay from occurring when changing the mode of the NAN cluster.

FIG. 14 is a block diagram illustrating the electronic device 1401 in a network environment 1400 according to an embodiment. Referring to FIG. 14, the electronic device 1401 in the network environment 1400 may communicate with an electronic device 1402 via a first network 1498 (e.g., a short-range wireless communication network), or communicate with at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include the processor 1420, the memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module (SIM) 1496, or an antenna module 1497. In some embodiments, at least one (e.g., the connecting terminal 1478) of the above components may be omitted from the electronic device 1401, or one or more other components may be added in the electronic device 1401. In some embodiments, some (e.g., the sensor module 1476, the camera module 1480, or the antenna module 1497) of the components may be integrated as a single component (e.g., the display module 1460).

The processor 1420 may execute, for example, software (e.g., a program 1440) to control at least one other component (e.g., a hardware or software component) of the electronic device 1401 connected to the processor 1420, and may perform various data processing or computation. According to an embodiment, as at least part of data processing or computation, the processor 1420 may store a command or data received from another component (e.g., the sensor module 1476 or the communication module 1490) in a volatile memory 1432, process the command or the data stored in the volatile memory 1432, and store resulting data in a non-volatile memory 1434. According to an embodiment, the processor 1420 may include a main processor 1421 (e.g., a central processing unit (CPU) or an application processor (AP)) or an auxiliary processor 1423 (e.g., a graphics processing unit (GPU), a neural processing unit (NPU), an image signal processor (ISP), a sensor hub processor, or a communication processor (CP)) that is operable independently from, or in conjunction with the main processor 1421. For example, when the electronic device 1401 includes the main processor 1421 and the auxiliary processor 1423, the auxiliary processor 1423 may be adapted to consume less power than the main processor 1421 or to be specific to a specified function. The auxiliary processor 1423 may be implemented as separate from, or as part of the main processor 1421.

The auxiliary processor 1423 may control at least some of functions or states related to at least one (e.g., the display module 1460, the sensor module 1476, or the communication module 1490) of the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an ISP or a CP) may be implemented as part of another component (e.g., the camera module 1480 or the communication module 1490) functionally related to the auxiliary processor 1423. According to an embodiment, the auxiliary processor 1423 (e.g., an NPU) may include a hardware structure specified for artificial intelligence model processing. An artificial intelligence model may be generated through machine learning. Such learning may be performed, for example, by the electronic device 1401 in which an artificial intelligence model is executed, or via a separate server (e.g., the server 1408). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof but is not limited thereto. The artificial intelligence model may, additionally or alternatively, include a software structure other than the hardware structure.

The memory 1430 may store various pieces of data used by at least one component (e.g., the processor 1420 or the sensor module 1476) of the electronic device 1401. The various pieces of data may include, for example, software (e.g., the program 1440) and input data or output data for a command related thereto. The memory 1430 may include the volatile memory 1432 or the non-volatile memory 1434.

The program 1440 may be stored as software in the memory 1430, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output a sound signal to the outside of the electronic device 1401. The sound output module 1455 may include, for example, a speaker or a receiver. The speaker may be used for general purposes, such as playing multimedia or playing record. The receiver may be used to receive an incoming call. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to sense a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or an external electronic device (e.g., the electronic device 1402 such as a speaker or headphones) directly or wirelessly connected to the electronic device 1401.

The sensor module 1476 may detect an operational state (e.g., power or temperature) of the electronic device 1401 or an environmental state (e.g., a state of a user) external to the electronic device 1401, and generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., by wire) or wirelessly. According to an embodiment, the interface 1477 may include, for example, a high-definition multimedia interface (HDMI), a universal serial bus (USB) interface, a secure digital (SD) card interface, or an audio interface.

The connecting terminal 1478 may include a connector via which the electronic device 1401 may be physically connected to the external electronic device (e.g., the electronic device 1402). According to an embodiment, the connecting terminal 1478 may include, for example, an HDMI connector, a USB connector, an SD card connector, or an audio connector (e.g., a headphone connector).

The haptic module 1479 may convert an electrical signal into a mechanical stimulus (e.g., a vibration or a movement) or an electrical stimulus which may be recognized by a user via his or her tactile sensation or kinesthetic sensation. According to an embodiment, the haptic module 1479 may include, for example, a motor, a piezoelectric element, or an electric stimulator.

The camera module 1480 may capture a still image and moving images. According to an embodiment, the camera module 1480 may include one or more lenses, image sensors, ISPs, or flashes.

The power management module 1488 may manage power supplied to the electronic device 1401. According to an embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more CPs that are operable independently of the processor 1420 (e.g., an AP) and that support a direct (e.g., wired) communication or a wireless communication. According to an embodiment, the communication module 1490 may include the wireless communication module 1492 (e.g., a cellular communication module, a short-range wireless communication module, or a global navigation satellite system (GNSS) communication module) or a wired communication module 1494 (e.g., a local area network (LAN) communication module, or a power line communication (PLC) module). A corresponding one of these communication modules may communicate with the external electronic device 1404 via the first network 1498 (e.g., a short-range communication network, such as Bluetooth™, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the SIM 1496.

The wireless communication module 1492 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., a mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1497 may transmit or receive a signal or power to or from the outside (e.g., an external electronic device) of the electronic device 1401. According to an embodiment, the antenna module 1497 may include an antenna including a radiating element including a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in a communication network, such as the first network 1498 or the second network 1499, may be selected by, for example, the communication module 1490 from the plurality of antennas. The signal or power may be transmitted or received between the communication module 1490 and the external electronic device via the at least one selected antenna. According to an embodiment, another component (e.g., a radio frequency integrated circuit (RFIC)) other than the radiating element may be additionally formed as part of the antenna module 1497.

According to an embodiment, the antenna module 1497 may form a mmWave antenna module. According to an embodiment, the mmWave antenna module may include a PCB, an RFIC disposed on a first surface (e.g., the bottom surface) of the PCB or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the external electronic devices 1402 and 1404 may be a device of the same type as or a different type from the electronic device 1401. According to an embodiment, all or some of operations to be executed by the electronic device 1401 may be executed at one or more of external electronic devices (e.g., the external electronic devices 1402 and 1404, and the server 1408). For example, if the electronic device 1401 needs to perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or MEC. **In** another embodiment, the external electronic device 1404 may include an Internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., a smart home, a smart city, a smart car, or healthcare) based on 5G communication technology or IoT-related technology.

The electronic device according to the embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B or C", "at least one of A, B and C", and "at least one of A, B, or C", may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if a component (e.g., a first component) is referred to, with or without the term "operatively" or "communicatively", as "coupled with", "coupled to", "connected with", or "connected to" another component (e.g., a second component), it means that the component may be coupled with the other component directly (e.g., by wire), wirelessly, or via a third component.

As used in connection with embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 1440) including one or more instructions that are stored in a storage medium (e.g., an internal memory 1436 or an external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

According to an embodiment, an electronic device (e.g., the electronic device 901 of FIG. 9 or the electronic device 1401 of FIG. 14) may include at least one wireless communication module (e.g., the wireless communication module 910 of FIG. 9 or the wireless communication module 1492 of FIG. 14) configured to transmit and receive a wireless signal, at least one processor (e.g., the processor 920 of FIG. 9 or the processor 1420 of FIG. 14) electrically and/or operatively connected to the wireless communication module 910, and a memory (e.g., the memory 930 of FIG. 9 or the memory 1430 of FIG. 14) electrically connected to the processor 920 and configured to store instructions executable by the processor 920. When the instructions are executed by the processor 920, the processor 920 may be configured to perform a plurality of operations. The plurality of operations may include performing a synchronization process with an external electronic device (e.g., the external electronic device 1002 of FIG. 10A or the electronic device 1402 or 1404 of FIG. 14) based on TSF timer associated information of a reference AP (e.g., the AP 1003 of FIG. 10A). That is, the processor 920 may synchronize the electronic device 901 with an external electronic device. The plurality of operations may include forming a NAN cluster including the electronic device and the external electronic device based on a result of performing the synchronization. The NAN cluster may be maintained in a non-master mode based on TSF timer information of the reference AP.

According to an embodiment, the reference AP may be connected to the electronic device and the external electronic device.

According to an embodiment, the reference AP may be an AP that transmits an AP signal having a maximum RSSI among AP signals received by the electronic device and the external electronic device together.

According to an embodiment, the reference AP may be determined from among an AP connected to the electronic device and an AP connected to the external electronic device.

According to an embodiment, the TSF timer associated information may include first TSF offset information and second TSF offset information. The first TSF offset information may be obtained based on TSF timer information of the electronic device and TSF timer information of the reference AP. The second TSF offset information may be obtained based on TSF timer information of the external electronic device and the TSF timer information of the reference AP.

According to an embodiment, the plurality of operations may further include exchanging service information corresponding to an application being executed by the electronic device with the external electronic device.

According to an embodiment, the performing of the synchronization may be performed when an application being executed by the electronic device is the same as an application being executed by the external electronic device, before NAN triggering for NAN-based communication.

According to an embodiment, the performing of the synchronization may include synchronizing a DW start time of the electronic device with a DW start time of the external electronic device by synchronizing a TSF timer of the electronic device with a TSF timer of the external electronic device.

According to an embodiment, the plurality of operations may further include predetermining a master device of the NAN cluster based on a master rank of the electronic device and a master rank of the external electronic device while the NAN cluster is maintained in the non-master mode.

According to an embodiment, the NAN cluster may be maintained in a master mode based on TSF timer information of a predetermined master device when the electronic device is disconnected from the reference AP.

According to an embodiment, the NAN cluster may be maintained in a master mode based on TSF timer information of a predetermined master device when the electronic device is unable to receive a signal from the reference AP.

According to an embodiment, an electronic device (e.g., the electronic device 901 of FIG. 9 or the electronic device 1401 of FIG. 14) may include at least one wireless communication module (e.g., the wireless communication module 910 of FIG. 9 or the wireless communication module 1492 of FIG. 14) configured to transmit and receive a wireless signal, at least one processor (e.g., the processor 920 of FIG. 9 or the processor 1420 of FIG. 14) electrically and/or operatively connected to the wireless communication module 910, and a memory (e.g., the memory 930 of FIG. 9 or the memory 1430 of FIG. 14) electrically connected to the processor 920 and configured to store instructions executable by the processor 920. When the instructions are executed by the processor 920, the processor 920 may be configured to perform a plurality of operations. The plurality of operations may include forming a NAN cluster including the electronic device based on TSF timer associated information of a reference AP (e.g., the AP 1003 of FIG. 10A). The NAN cluster may be maintained in a non-master mode based on TSF timer information of the reference AP or maintained in a master mode based on TSF timer information of a master device of the NAN cluster.

According to an embodiment, the plurality of operations may further include performing synchronization with an external electronic device (e.g., the external electronic device 1002 of FIG. 10A or the external electronic device 1402 or 1404 of FIG. 14) based on the TSF timer associated information. The forming of the NAN cluster may include forming the NAN cluster including the electronic device and the external electronic device based on a result of performing the synchronization.

According to an embodiment, the TSF timer associated information may include first TSF offset information and second TSF offset information. The first TSF offset information may be obtained based on TSF timer information of the electronic device and TSF timer information of the reference AP. The second TSF offset information may be obtained based on TSF timer information of the external electronic device and the TSF timer information of the reference AP.

According to an embodiment, the master device may be predetermined based on a master rank of the electronic device and a master rank of the external electronic device while the NAN cluster is maintained in the non-master mode.

According to an embodiment, the performing of the synchronization may include synchronizing a DW start time of the electronic device with a DW start time of the external electronic device by synchronizing a TSF timer of the electronic device with a TSF timer of the external electronic device.

According to an embodiment, the performing of the synchronization may be performed when an application being executed by the electronic device is the same as an application being executed by the external electronic device, before NAN triggering for NAN-based communication.

According to an embodiment, the reference AP may be connected to the electronic device and the external electronic device.

According to an embodiment, the reference AP may be an AP that transmits an AP signal having a maximum RSSI among AP signals received by the electronic device and the external electronic device together.

According to an embodiment, the reference AP may be determined from among an AP connected to the electronic device and an AP connected to the external electronic device.

It will be appreciated that the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

**Claims**

1. An electronic device (901, 1401) comprising:

   at least one wireless communication module (910, 1492) configured to transmit and receive a wireless signal;
   at least one processor (920, 1420) electrically and/or operatively connected to the wireless communication module (910, 1492); and

a memory (930, 1430) electrically and/or operatively connected to the processor (920, 1420) and configured to store instructions executable by the processor (920, 1420),

wherein, when the instructions are executed by the processor (920, 1420), the processor (920, 1420) is configured to:

perform a discovery operation and a synchronization with an external electronic device (1002, 1402, 1404) based on time synchronization function, TSF, timer associated information of a reference access point, AP (1003); and

form a neighbor awareness networking, NAN, cluster comprising the electronic device (901, 1401) and the external electronic device (1002, 1402, 1404) based on a result of performing the synchronization, wherein the NAN cluster is maintained in a non-master mode based on TSF timer information of the reference AP (1003),

wherein the non-master mode is a mode in which the electronic device (901, 1401) and the external electronic device (1002, 1402, 1404) comprised in the NAN cluster remain in a sleep state during intervals between discovery windows, DWs.

2. The electronic device (901, 1401) of claim 1, wherein
the reference AP (1003) is connected to the electronic device (901, 1401) and the external electronic device (1002, 1402, 1404).

3. The electronic device (901, 1401) of claim 1 or claim 2, wherein
the reference AP (1003) is an AP that transmits an AP signal having a maximum received signal strength indicator, RSSI, among one or more AP signals received by one or both of the electronic device (901,1401) and the external electronic device (1002, 1402, 1404).

4. The electronic device (901, 1401) of any of claims 1 to 3, wherein
the reference AP (1003) is determined from among an AP (1201) connected to the electronic device (901, 1401) and an AP (1202) connected to the external electronic device (1002, 1402, 1404).

5. The electronic device (901, 1401) of any of claims 1 to 4, wherein

the TSF timer associated information comprises first TSF offset information and second TSF offset information, wherein the first TSF offset information is obtained based on TSF timer information of the electronic device (901, 1401) and TSF timer information of the reference AP (1003), and

the second TSF offset information is obtained based on TSF timer information of the external electronic device (1002, 1402, 1404) and the TSF timer information of the reference AP (1003).

6. The electronic device (901,1401) of any of claims 1 to 5, wherein
the processor is further configured to exchange service information corresponding to an application being executed by the electronic device (901, 1401) with the external electronic device (1002, 1402, 1404).

7. The electronic device (901, 1401) of any of claims 1 to 6, wherein
the performing of the synchronization is performed when an application being executed by the electronic device (901, 1401) is the same as an application being executed by the external electronic device (1002, 1402, 1404), before NAN triggering for NAN-based communication.

8. The electronic device (901, 1401) of any of claims 1 to 7, wherein
the performing of the synchronization comprises synchronizing a discovery window, DW, start time of the electronic device (901, 1401) with a DW start time of the external electronic device (1002, 1402, 1404) by synchronizing a TSF timer of the electronic device (901, 1401) with a TSF timer of the external electronic device (1002, 1402, 1404).

9. The electronic device (901, 1401) of any of claims 1 to 8, wherein
the processor is further configured to predetermine a master device of the NAN cluster based on a master rank of the electronic device (901, 1401) and a master rank of the external electronic device (1002, 1402, 1404) while the NAN cluster is maintained in the non-master mode.

10. The electronic device (901, 1401) of any of claims 1 to 9, wherein

the NAN cluster is maintained in a master mode based on TSF timer information of a predetermined master device when the electronic device (901, 1401) is disconnected from the reference AP (1003).

11. The electronic device (901, 1401) of any of claims 1 to 10, wherein
the NAN cluster is maintained in a master mode based on TSF timer information of a predetermined master device when the electronic device (901, 1401) is unable to receive a signal from the reference AP (1003).

**Patentansprüche**

1. Elektronische Vorrichtung (901, 1401), umfassend:

   mindestens ein drahtloses Kommunikationsmodul (910, 1492), das dazu konfiguriert ist, ein drahtloses Signal zu übertragen und zu empfangen;
   mindestens einen Prozessor (920, 1420), der mit dem drahtlosen Kommunikationsmodul (910, 1492) elektrisch verbunden und/oder wirkverbunden ist; und
   einen Speicher (930, 1430), der mit dem Prozessor (920, 1420) elektrisch verbunden und/oder wirkverbunden ist und dazu konfiguriert ist, durch den Prozessor (920, 1420) ausführbare Anweisungen zu speichern,
   wobei, wenn die Anweisungen durch den Prozessor (920, 1420) ausgeführt werden, der Prozessor (920, 1420) zu Folgendem konfiguriert ist:

   Durchführen einer Ermittlungsoperation und einer Synchronisation mit einer externen elektronischen Vorrichtung (1002, 1402, 1404) basierend auf mit einem Zeitsynchronisationsfunktionszeitgeber, TSF-Zeitgeber, assoziierten Informationen eines Referenzzugriffspunkts, Referenz-AP (1003); und
   Bilden eines Neighbor-Awareness-Networking-Clusters, NAN-Clusters, der die elektronische Vorrichtung (901, 1401) und die externe elektronische Vorrichtung (1002, 1402, 1404) umfasst, basierend auf einem Ergebnis des Durchführens der Synchronisation,
   wobei der NAN-Cluster basierend auf TSF-Zeitgeberinformationen des Referenz-AP (1003) in einem Nicht-Master-Modus beibehalten wird,
   wobei der Nicht-Master-Modus ein Modus ist, in dem die elektronische Vorrichtung (901, 1401) und die externe elektronische Vorrichtung (1002, 1402, 1404), die in dem NAN-Cluster umfasst sind, während Intervallen zwischen Ermittlungsfenstern, DWs, in einem Schlafzustand bleiben.

2. Elektronische Vorrichtung (901, 1401) nach Anspruch 1, wobei
der Referenz-AP (1003) mit der elektronischen Vorrichtung (901, 1401) und der externen elektronischen Vorrichtung (1002, 1402, 1404) verbunden ist.

3. Elektronische Vorrichtung (901, 1401) nach Anspruch 1 oder Anspruch 2, wobei
der Referenz-AP (1003) ein AP ist, der ein AP-Signal mit einem Indikator für eine maximale Empfangssignalstärke, RSSI, aus einem oder mehreren AP-Signalen, die durch eine oder beide der elektronischen Vorrichtung (901, 1401) und der externen elektronischen Vorrichtung (1002, 1402, 1404) empfangen werden, überträgt.

4. Elektronische Vorrichtung (901, 1401) nach einem der Ansprüche 1 bis 3, wobei
der Referenz-AP (1003) aus einem AP (1201), der mit der elektronischen Vorrichtung (901, 1401) verbunden ist, und einem AP (1202), der mit der externen elektronischen Vorrichtung (1002, 1402, 1404) verbunden ist, bestimmt wird.

5. Elektronische Vorrichtung (901, 1401) nach einem der Ansprüche 1 bis 4, wobei

   die mit dem TSF-Zeitgeber assoziierten Informationen erste TSF-Offsetinformationen und zweite TSF-Offsetinformationen umfassen,
   wobei die ersten TSF-Offsetinformationen basierend auf TSF-Zeitgeberinformationen der elektronischen Vorrichtung (901, 1401) und TSF-Zeitgeberinformationen des Referenz-AP (1003) erlangt werden und
   die zweiten TSF-Offsetinformationen basierend auf TSF-Zeitgeberinformationen der externen elektronischen Vorrichtung (1002, 1402, 1404) und den TSF-Zeitgeberinformationen des Referenz-AP (1003) erlangt werden.

6. Elektronische Vorrichtung (901, 1401) nach einem der Ansprüche 1 bis 5, wobei
der Prozessor ferner dazu konfiguriert ist, Dienstinformationen, die einer Anwendung entsprechen, die durch die elektronische Vorrichtung (901, 1401) ausgeführt wird, mit der externen elektronischen Vorrichtung (1002, 1402, 1404) auszutauschen.

7. Elektronische Vorrichtung (901, 1401) nach einem der Ansprüche 1 bis 6, wobei
das Durchführen der Synchronisation durchgeführt wird, wenn eine Anwendung, die durch die elektronische Vorrichtung (901, 1401) ausgeführt wird, die gleiche ist wie eine Anwendung, die durch die externe elektronische Vorrichtung (1002, 1402, 1404) ausgeführt wird, vor NAN-Auslösen für NAN-basierte Kommunikation.

8. Elektronische Vorrichtung (901, 1401) nach einem der Ansprüche 1 bis 7, wobei
das Durchführen der Synchronisation Synchronisieren einer Ermittlungsfensterstartzeit, DW-Startzeit, der elektronischen Vorrichtung (901, 1401) mit einer DW-Startzeit der externen elektronischen Vorrichtung (1002, 1402, 1404) durch Synchronisieren eines TSF-Zeitgebers der elektronischen Vorrichtung (901, 1401) mit einem TSF-Zeitgeber der externen elektronischen Vorrichtung (1002, 1402, 1404) umfasst.

9. Elektronische Vorrichtung (901, 1401) nach einem der Ansprüche 1 bis 8, wobei
der Prozessor ferner dazu konfiguriert ist, eine Master-Vorrichtung des NAN-Clusters basierend auf einem Master-Rang der elektronischen Vorrichtung (901, 1401) und einem Master-Rang der externen elektronischen Vorrichtung (1002, 1402, 1404) vorzubestimmen, während der NAN-Cluster in dem Nicht-Master-Modus beibehalten wird.

10. Elektronische Vorrichtung (901, 1401) nach einem der Ansprüche 1 bis 9, wobei
der NAN-Cluster basierend auf TSF-Zeitgeberinformationen einer vorbestimmten Master-Vorrichtung in einem Master-Modus beibehalten wird, wenn die elektronische Vorrichtung (901, 1401) von dem Referenz-AP (1003) getrennt wird.

11. Elektronische Vorrichtung (901, 1401) nach einem der Ansprüche 1 bis 10, wobei
der NAN-Cluster basierend auf TSF-Zeitgeberinformationen einer vorbestimmten Master-Vorrichtung in einem Master-Modus beibehalten wird, wenn die elektronische Vorrichtung (901, 1401) nicht in der Lage ist, ein Signal von dem Referenz-AP (1003) zu empfangen.

**Revendications**

1. Dispositif électronique (901, 1401) comprenant :

   au moins un module de communication sans fil (910, 1492) configuré pour transmettre et recevoir un signal sans fil ;
   au moins un processeur (920, 1420) électriquement et/ou fonctionnellement connecté au module de communication sans fil (910, 1492) ; et
   une mémoire (930, 1430) électriquement et/ou fonctionnellement connectée au processeur (920, 1420) et configurée pour stocker des instructions exécutables par le processeur (920, 1420),
   dans lequel, lorsque les instructions sont exécutées par le processeur (920, 1420), le processeur (920, 1420) est configuré pour :

   réaliser une opération de découverte et une synchronisation avec un dispositif électronique externe (1002, 1402, 1404) sur la base d'informations associées à une minuterie de fonction de synchronisation temporelle, TSF, d'un point d'accès, AP, de référence (1003) ; et
   former un groupe de mise en réseau de sensibilisation de voisinage, NAN, comprenant le dispositif électronique (901, 1401) et le dispositif électronique externe (1002, 1402, 1404) sur la base d'un résultat de réalisation de la synchronisation,
   dans lequel le groupe NAN est maintenu dans un mode non maître sur la base d'informations de minuterie TSF de l'AP de référence (1003),
   dans lequel le mode non maître est un mode dans lequel le dispositif électronique (901, 1401) et le dispositif électronique externe (1002, 1402, 1404) compris dans le groupe NAN restent dans un état de sommeil pendant des intervalles entre des fenêtres de découverte, DW.

2. Dispositif électronique (901, 1401) de la revendication 1, dans lequel
l'AP de référence (1003) est connecté au dispositif électronique (901, 1401) et au dispositif électronique externe (1002, 1402, 1404).

**3.** Dispositif électronique (901, 1401) de la revendication 1 ou de la revendication 2, dans lequel
l'AP de référence (1003) est un AP qui transmet un signal d'AP présentant un indicateur d'intensité de signal reçu maximum, RSSI, parmi un ou plusieurs signaux d'AP reçus par l'un ou les deux parmi le dispositif électronique (901, 1401) et le dispositif électronique externe (1002, 1402, 1404).

**4.** Dispositif électronique (901, 1401) de l'une quelconque des revendications 1 à 3, dans lequel

l'AP de référence (1003) est déterminé parmi un AP (1201) connecté au
dispositif électronique (901, 1401) et un AP (1202) connecté au dispositif électronique externe (1002, 1402, 1404).

**5.** Dispositif électronique (901, 1401) de l'une quelconque des revendications 1 à 4, dans lequel

les informations associées à la minuterie TSF comprennent des premières informations de décalage TSF et des secondes informations de décalage TSF,
dans lequel les premières informations de décalage TSF sont obtenues sur la base des informations de minuterie TSF du dispositif électronique (901, 1401) et des informations de minuterie TSF de l'AP de référence (1003), et les secondes informations de décalage TSF sont obtenues sur la base des informations de minuterie TSF du dispositif électronique externe (1002, 1402, 1404) et des informations de minuterie TSF de l'AP de référence (1003).

**6.** Dispositif électronique (901,1401) de l'une quelconque des revendications 1 à 5, dans lequel
le processeur est en outre configuré pour échanger des informations de service correspondant à une application en cours d'exécution par le dispositif électronique (901, 1401) avec le dispositif électronique externe (1002, 1402, 1404).

**7.** Dispositif électronique (901, 1401) de l'une quelconque des revendications 1 à 6, dans lequel
la réalisation de la synchronisation est réalisée lorsqu'une application en cours d'exécution par le dispositif électronique (901, 1401) est la même qu'une application en cours d'exécution par le dispositif électronique externe (1002, 1402, 1404), avant un déclenchement de NAN pour une communication basée sur NAN.

**8.** Dispositif électronique (901, 1401) de l'une quelconque des revendications 1 à 7, dans lequel
la réalisation de la synchronisation comprend la synchronisation d'une heure de début de fenêtre de découverte, DW, du dispositif électronique (901, 1401) avec une heure de début de DW du dispositif électronique externe (1002, 1402, 1404) en synchronisant une minuterie TSF du dispositif électronique (901, 1401) avec une minuterie TSF du dispositif électronique externe (1002, 1402, 1404).

**9.** Dispositif électronique (901, 1401) de l'une quelconque des revendications 1 à 8, dans lequel
le processeur est en outre configuré pour prédéterminer un dispositif maître du groupe NAN sur la base d'un rang de maître du dispositif électronique (901, 1401) et d'un rang de maître du dispositif électronique externe (1002, 1402, 1404) tandis que le groupe NAN est maintenu dans le mode non maître.

**10.** Dispositif électronique (901, 1401) de l'une quelconque des revendications 1 à 9, dans lequel
le groupe NAN est maintenu dans un mode maître sur la base d'informations de minuterie TSF d'un dispositif maître prédéterminé lorsque le dispositif électronique (901, 1401) est déconnecté de l'AP de référence (1003).

**11.** Dispositif électronique (901, 1401) de l'une quelconque des revendications 1 à 10, dans lequel
le groupe NAN est maintenu dans un mode maître sur la base d'informations de minuterie TSF d'un dispositif maître prédéterminé lorsque le dispositif électronique (901, 1401) est incapable de recevoir un signal provenant de l'AP de référence (1003).

FIG. 1

NAN Discovery Beacons [ch.6] 230

NAN Devices contend to transmit NAN Sync Beacons [ch.6] 210

NAN Devices contend to transmit NAN Service Discovery frames [ch.6] 220

NAN Discovery Beacons [ch.6] 230

NAN Devices contend to transmit NAN Sync Beacons [ch.6] 210

NAN Devices contend to transmit NAN Service Discovery frames [ch.6] 220

NAN Discovery Beacons [ch.6] 230

DWStart

DWEnd

DWStart

DWEnd

512 TUs

DW 225
16 TUs

DW 225

Interval between DWs 240

FIG. 2

: Beacons and SDFs transmitted by master device within DW

Synchronous

DW

DW
350

Interval
360

: All electronic devices in cluster receive beacons and SDFs from master device

FIG. 3

FIG. 4

FIG. 5

FIG. 6A

EP 4 358 606 B1

Master device 301

Non-master device 602

Non-master device 603

FIG. 6B

EP 4 358 606 B1

EP 4 358 606 B1

| Anchor master device 701 | | | | | | | |
|---|---|---|---|---|---|---|---|
| TSF time (Time Synchronization Function) | | | | | | | |
| octet 7 | octet 6 | octet 5 | octet 4 | octet 3 | octet 2 | octet 1 | octet 0 |
| 63 62 61 60 59 58 57 56 | 55 54 53 52 51 50 49 48 | 47 46 45 44 43 42 41 40 | 39 38 37 36 35 34 33 32 | 31 30 29 28 27 26 25 24 | 23 22 21 20 19 18 17 16 | 15 14 13 12 11 10 9 8 | 7 6 5 4 3 2 1 0 |
| | | | | | 0 0 0 0 0 0 0 0 | 0 0 0 0 0 0 0 0 | 0 0 0 0 0 0 0 0 |

S12 TU          1 TU          1/1024 TU

## FIG. 7A

## FIG. 7B

FIG. 8

FIG. 9

FIG. 10A

FIG. 10B

FIG. 10C

AP 1003          Electronic device 901                    External electronic device 1002

Search for APs and determine
reference AP 1111

Search for APs and determine
reference AP 1111

Perform discovery operation and perform synchronization 1113

NAN activation request 1115

Perform NAN communication in non-master mode 1117

Out of Coverage 1119

Master mode switch request 1121

Maintain pre-generated NAN cluster and perform
NAN communication in master mode 1123

FIG. 11

**AP 1 1201**    **Electronic device 901**                              **External electronic device 1002 AP 2 1202**

| Wi-Fi Connected | | Wi-Fi Connected |
|---|---|---|

Perform discovery operation and perform synchronization 1211

Determine reference AP 1213

NAN activation request 1215

Perform NAN communication in non-master mode 1217

AP disconnected 1219

Master mode switch request 1221

Maintain pre-generated NAN cluster and perform
NAN communication in master mode 1223

FIG. 12

Start

1310

Perform synchronization with external electronic device
based on TSF timer associated information of reference AP

1320

Form NAN cluster including electronic device and
external electronic device based on result of performing synchronization

End

FIG. 13A

Start

1330

Form NAN cluster including electronic device based on
TSF timer associated information of reference AP

End

FIG. 13B

FIG. 14

EP 4 358 606 B1

**REFERENCES CITED IN THE DESCRIPTION**

**Patent documents cited in the description**

- US 20150245305 A
- US 2019021050 A1